(19) Europäisches Patentamt
European Patent Office
Office européen des brevets

(11) EP 4 610 286 A1

(12) # EUROPEAN PATENT APPLICATION
published in accordance with Art. 153(4) EPC

(43) Date of publication:
**03.09.2025 Bulletin 2025/36**

(21) Application number: **23927974.8**

(22) Date of filing: **21.03.2023**

(51) International Patent Classification (IPC):
***C08F 226/10*** *(2006.01)* ***C08F 220/06*** *(2006.01)*
***H01M 10/0525*** *(2010.01)* ***H01M 4/62*** *(2006.01)*
***H01M 4/131*** *(2010.01)*

(52) Cooperative Patent Classification (CPC):
**C08F 220/06; C08F 226/10; H01M 4/131; H01M 4/62; H01M 10/0525;** Y02E 60/10

(86) International application number:
**PCT/CN2023/082671**

(87) International publication number:
**WO 2024/192657 (26.09.2024 Gazette 2024/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology (Hong Kong) Limited**
**Hong Kong (HK)**

(72) Inventors:
- **XU, Jian**
  **Ningde, Fujian 352100 (CN)**
- **SHANG, Yibo**
  **Ningde, Fujian 352100 (CN)**
- **XU, Xiaofu**
  **Ningde, Fujian 352100 (CN)**
- **QIN, Yiming**
  **Ningde, Fujian 352100 (CN)**
- **PAN, Jianfu**
  **Ningde, Fujian 352100 (CN)**
- **ZHANG, Xinyu**
  **Ningde, Fujian 352100 (CN)**
- **LIU, Qian**
  **Ningde, Fujian 352100 (CN)**
- **YE, Yonghuang**
  **Ningde, Fujian 352100 (CN)**

(74) Representative: **Kraus & Lederer PartGmbB**
**Thomas-Wimmer-Ring 15**
**80539 München (DE)**

(54) **POLYMER AND PREPARATION METHOD THEREFOR, POSITIVE ELECTRODE SHEET, SECONDARY BATTERY, AND ELECTRIC DEVICE**

(57) The present application provides a polymer and a preparation method therefor, a positive electrode, a secondary battery, and an electrical device. The polymer includes a first polymer. The first polymer includes a structural unit represented by formula (1), where in formula (1), $R_{11}$, $R_{12}$, and $R_{13}$ each independently include a hydrogen atom or a substituted or unsubstituted C1-C5 alkyl group; and when substituted, the substituent includes a halogen atom.

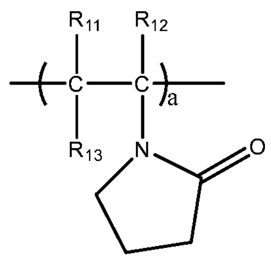

Formula (1)

EP 4 610 286 A1

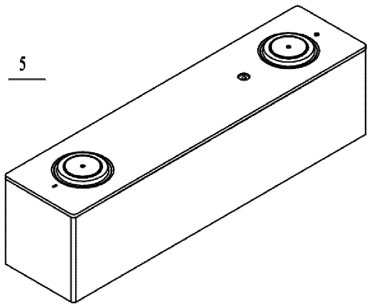


FIG. 1

## Description

### TECHNICAL FIELD

The present disclosure relates to the technical field of batteries, and specifically to a polymer and a preparation method therefor, a positive electrode, a secondary battery, and an electrical device.

### BACKGROUND

Secondary batteries have features such as a high capacity and a long life, and therefore are widely applied to electronic devices, such as a mobile phone, a notebook computer, an electric bicycle, an electric automobile, an electric plane, an electric ship, an electric toy car, an electric toy ship, an electric toy plane, and an electric tool.

With an increasingly wide application range of batteries, requirements on performance of secondary batteries are becoming more stringent. To improve the performance of secondary batteries, electrodes in the secondary batteries are usually optimized and improved. However, currently, the performance of film layers in the electrodes is relatively poor, and the application of such film layers to a secondary battery leads to poor cycle performance of the secondary battery.

### SUMMARY

To solve the above problem, an objective of the present application is to provide a polymer and a preparation method therefor, a positive electrode, a secondary battery, and an electrical device.

According to a first aspect, an embodiment of the present application provides a polymer. The polymer includes a first polymer. The first polymer includes a structural unit represented by formula (1):

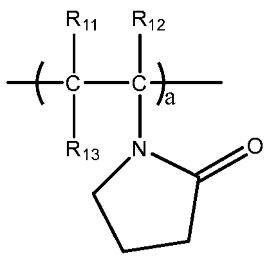

Formula (1),

where in formula (1), $R_{11}$, $R_{12}$, and $R_{13}$ each independently include a hydrogen atom or a substituted or unsubstituted C1-C5 alkyl group; and when substituted, the substituent includes a halogen atom; and
the first polymer further includes a structural unit represented by formula (2):

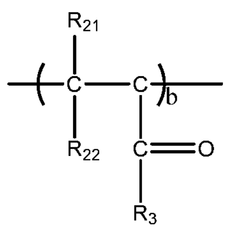

Formula (2),

where in formula (2), $R_{21}$ and $R_{22}$ each independently include a hydrogen atom or a substituted or unsubstituted C1-C5 alkyl group; and when substituted, the substituent includes a halogen atom; and $R_3$ includes a hydroxyl-terminated polymer group.

Therefore, the first polymer according to the embodiments of the present application includes a plurality of blocks, for example, a block including the structural unit represented by formula (1) and a block including the structural unit represented by formula (2). The plurality of blocks have a synergistic effect and can be bonded to the surface of the positive electrode active material through a $\pi$ - $\pi$-bond and a hydrogen bond, and the particles of the positive electrode active material are stably dispersed by means of spatial hindrance, so that the solid content in the positive electrode slurry can be increased, and the gelation phenomenon can be reduced. In addition, the first polymer can act on molecular chains of the binder, to reduce the crystallinity of the binder, thereby improving the flexibility of the positive electrode film layer. The first

polymer, as a dispersant, can have a synergistic effect with the binder to improve the uniform dispersion of the particles of the positive electrode active material while ensuring the binding performance of the positive electrode slurry, thereby improving the stability of the positive electrode slurry, improving the processability of the positive electrode slurry, reducing the risk of cracking of the positive electrode, and improving the production efficiency of the positive electrode slurry.

In some embodiments, $R_{11}$, $R_{12}$, and $R_{13}$ each independently include a hydrogen atom or a substituted or unsubstituted C1-C3 alkyl group.

In some embodiments, $R_{11}$, $R_{12}$, and $R_{13}$ each independently include a hydrogen atom, a methyl, or an ethyl.

In some embodiments, the structural unit represented by formula (1) includes one or more of structural units represented by formula (1-1) to formula (1-5):

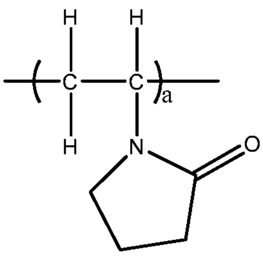 Formula (1-1), 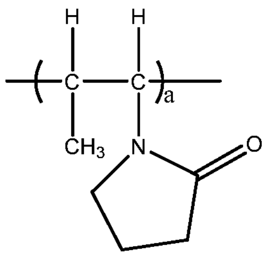 Formula (1-2),

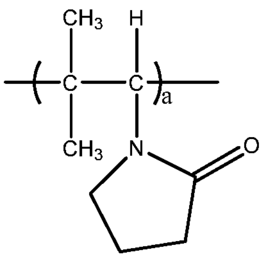 Formula (1-3), 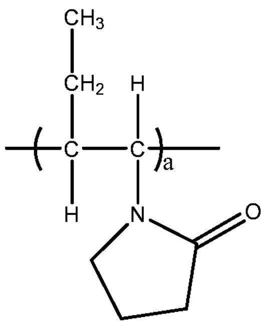 Formula (1-4), and

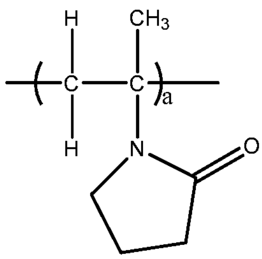 Formula (1-5).

In some embodiments, $R_{21}$ and $R_{22}$ each independently include a hydrogen atom or a substituted or unsubstituted C1-C3 alkyl group.

In some embodiments, $R_{21}$ and $R_{22}$ each independently include a hydrogen atom, a methyl, or an ethyl.

In some embodiments, the structural unit represented by formula (2) includes one or more of structural units represented by formula (2-1) to formula (2-4):

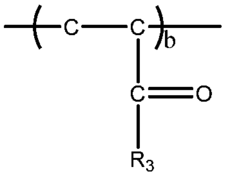 Formula (2-1), 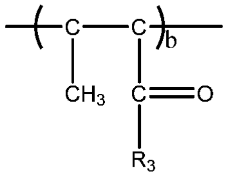 Formula (2-2),

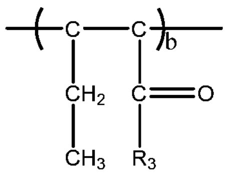 Formula (2-3), and 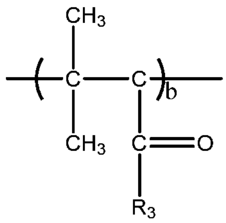 Formula (2-4).

In some embodiments, $R_3$ includes one or more of structural units represented by formula (3-1) to formula (3-4):

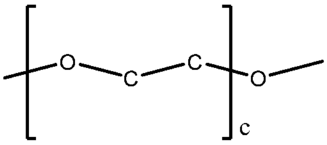 Formula (3-1), 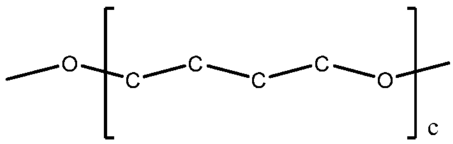 Formula (3-2),

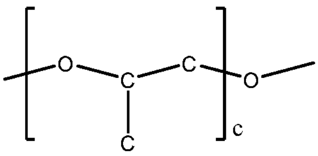 Formula (3-3), and 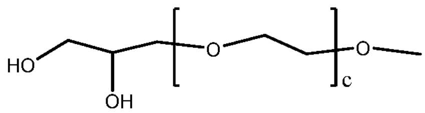 Formula (3-4).

In some embodiments, $0.05 \leq a/c \leq 20$; and optionally, $0.1 \leq a/c \leq 10$. When a/c falls within the above range, the dispersion stability of the slurry and the flexibility of the electrode can be further improved.

In some embodiments, $a/b \geq 10$. When a/b falls within the above range, the dispersion effect of the first polymer can be further improved.

In some embodiments, a is a positive integer from 10 to 500.

In some embodiments, b is a positive integer from 1 to 500.

In some embodiments, c is a positive integer from 2 to 500.

In some embodiments, the weight average molecular weight of the first polymer is $2\times10^3$ Da to $1\times10^5$ Da, optionally $2\times10^3$ Da to $6\times10^4$ Da. When the weight average molecular weight of the first polymer is within the above range, the weight average molecular weight of the first polymer is relatively low, and a good dispersion effect can be achieved.

According to a second aspect, an embodiment of the present application provides a method for preparing a polymer. The method includes: providing a first monomer and polymerizing the first monomer to form a first copolymer; adding a second monomer to the first copolymer for polymerization to form a second copolymer, where a terminal group of the second copolymer includes a carboxyl group; and adding a hydroxyl-terminated polymer to the second copolymer for esterification to form a first polymer, where the first monomer includes a compound represented by formula (I):

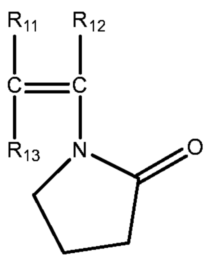 Formula (I),

where in formula (I), $R_{11}$, $R_{12}$, and $R_{13}$ each independently include a hydrogen atom or a substituted or unsubstituted C1-C5 alkyl group; and when substituted, the substituent includes a halogen atom; and

the second monomer includes a compound represented by formula (II):

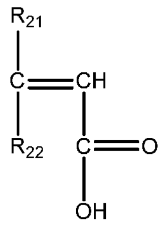
Formula (II),

where in formula (II), $R_{21}$ and $R_{22}$ each independently include a hydrogen atom or a substituted or unsubstituted C1-C5 alkyl group; and when substituted, the substituent includes a halogen atom.

In some embodiments, the compound represented by formula (I) includes one or more of compounds represented by formula (I-1) to formula (I-5):

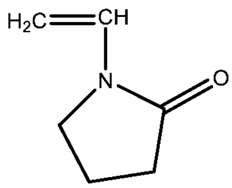
Formula (I-1),
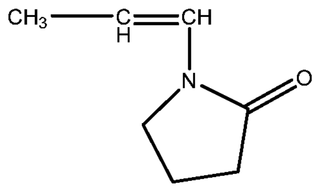
Formula (I-2),

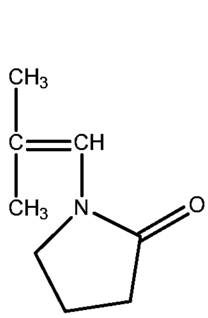
Formula (I-3),
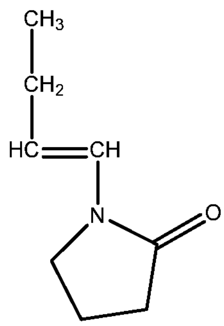
Formula (I-4), and

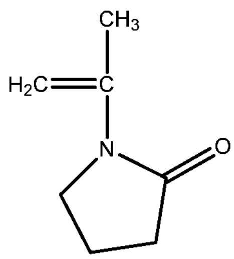
Formula (I-5).

In some embodiments, the second monomer includes one or more of acrylic acid, n-butenoic acid, hexenoic acid, n-pentenoic acid, isopentenic acid, n-hexenoic acid, isohexenoic acid, n-heptenoic acid, isoheptenoic acid, etc.

In some embodiments, the hydroxyl-terminated polymer includes one or more of polytetrahydrofuran, polyethylene oxide, polyethylene glycol, polypropylene glycol, and polyoxypropylene triol.

According to a third aspect, an embodiment of the present application provides a positive electrode current collector and a positive electrode film layer arranged on at least one surface of the positive electrode current collector, where the positive electrode film layer includes the first polymer according to any embodiment of the first aspect of the present application or the first polymer according to any embodiment of the second aspect of the present application.

In some embodiments, the positive electrode film layer further includes a second polymer, and the second polymer includes a compound represented by formula (4):

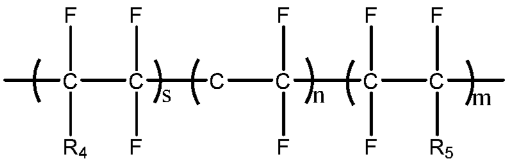 Formula (4),

where in formula (4), $R_4$ and $R_5$ each independently include a fluorine atom or a C1-C5 perfluoroalkyl group.

Therefore, according to the second polymer of the embodiments of the present application, the middle segment of the molecular chain of the second polymer has a structure obtained by homopolymerization of vinylidene fluoride, and the chain end of the middle segment can be copolymerized with a perfluoroolefin, i.e., a perfluoromonomer structure is introduced at the head and tail ends of the molecular chain. Because the carbon chain of the middle segment is zigzag-shaped, adjacent fluorine atoms repel each other, so that the fluorine atoms are not in the same plane and are distribute helically along the carbon chain. Therefore, the carbon chain is surrounded by a series of stable fluorine atoms, which makes the carbon chain not easily destroyed, showing very high chemical stability and thermal stability. Because the middle segment is homopolymerized by vinylidene fluoride, the middle segment has high crystallinity and good binding performance. Introducing a perfluoromonomer structure at the head and tail ends of the molecular chain, i.e., introducing copolymerization means can reduce the crystallinity of the entire polymer to a certain extent, thereby slightly reducing the binding performance of the entire polymer, but still ensuring the binding performance required for the second polymer to serve as a binder. Moreover, since the intermolecular force such as hydrogen bonding between the second polymer and the positive electrode active material is relatively weak, agglomeration between the particles of the positive electrode active material is not easily caused, and the dispersion effect of the positive electrode slurry is more stable, thereby improving the performance of the positive electrode film layer and improving the uniformity of the performance of the positive electrode film layer. Further, the second polymer, as a binder, can have a synergistic effect with the first polymer to improve the uniform dispersion of the particles of the positive electrode active material while improving the binding performance of the positive electrode slurry, thereby improving the stability of the positive electrode slurry.

In some embodiments, n>s; and /or n>m. Since the molecular weight of the middle segment of the molecular chain of the second polymer is larger than the molecular weights of the two ends of the molecular chain of the second polymer, the intermolecular force between the second polymer and the particles of the positive electrode active material can be further reduced, thereby further reducing the risk of agglomeration of the particles of the positive electrode active material.

In some embodiments, s includes a positive integer from 1 to 1000.

In some embodiments, n includes a positive integer ranging from 9000 to 13000.

In some embodiments, m includes a positive integer from 1 to 1000.

In some embodiments, the weight average molecular weight of the second polymer is $6\times10^5$ Da to $1\times10^6$ Da, optionally $6\times10^5$ Da to $8\times10^5$ Da.

In some embodiments, based on the total weight of the positive electrode film layer, the content in percentage by weight of the second polymer is y%, where $0.8\leq y\leq2.0$; and optionally, $1.0\leq y\leq1.6$. When the content in percentage by weight of the first polymer falls within the above range, the particles of the positive electrode active material can be uniformly dispersed in addition to binding the particles of the positive electrode active material with the binder, and the brittleness problem of the positive electrode can be improved, and the flexibility of the positive electrode can be further improved, thereby improving the mechanical properties of the entire positive electrode.

In some embodiments, based on the total weight of the positive electrode film layer, the content in percentage by weight of the first polymer is x%, where $0.02\leq x\leq1$; and optionally, $0.05\leq x\leq0.60$. When the content in percentage by weight of the second polymer falls within the above range, the particles of the positive electrode active material, the conductive agent, and the like in the positive electrode slurry can be bonded, so that the particles of the positive electrode active material are less likely to be deposited. In addition, the positive electrode slurry has good flowability and leveling property, facilitating its curing to form a positive electrode film layer on the positive electrode current collector, and the internal adhesion of the formed positive electrode film layer is not excessively strong, so that the flexibility of the positive electrode can be improved, and the mechanical property of the entire positive electrode can be improved.

In some embodiments, the positive electrode active material includes a first active material having a molecular formula of $Li_{x1}A_{y1}Ni_{a1}Co_{b1}Mn_{c1}M_{(1-a1-b1-c1)}Y_{z1}$, where $0\leq x1\leq2.1$, $0\leq y1\leq2.1$, and $0.9\leq x1+y1\leq2.1$; $0<a1\leq1$, $0<b1\leq1$, $0<c1\leq1$, and $0.1\leq a1+b1+c1\leq1$; $1.8\leq z1\leq3.5$; A includes one or more of Na, K, and Mg; M includes one or more of B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce; and Y' includes one or more of O and F.

In some embodiments, the positive electrode active material includes a first active material having a molecular formula of $Li_{x2}A'_{y2}Me'_{a2}M'_{b2}P_{1-c2}X'_{c2}Y'_{z2}$, where $0\leq x2\leq1.3$, $0\leq y2\leq1.3$, and $0.9\leq x2+y2\leq1.3$; $0.9\leq a2\leq1.5$, $0\leq b2\leq0.5$, and $0.9\leq a2+b2\leq1.5$; $0\leq c2\leq0.5$; $3\leq z2\leq5$; A' includes one or more of Na, K, and Mg; Me includes one or more of Mn, Fe, Co, and

Ni; M' includes one or more of B, Mg, Al, Si, P, S, Ca, Sc, Ti, V, Cr, Cu, Zn, Sr, Y, Zr, Nb, Mo, Cd, Sn, Sb, Te, Ba, Ta, W, Yb, La, and Ce; X' includes one or more of S, Si, Cl, B, C, and N; and Y' includes one or more of O and F.

In some embodiments, the positive electrode further satisfies: $0.03\% < \frac{n_1\%}{n2\%} \times y \leq 0.4\%$ ; optionally, $0.14\% < \frac{n_1\%}{n2\%} \times y \leq 0.37\%$ , further optionally, $0.20\% < \frac{n_1\%}{n2\%} \times y \leq 0.30\%$ ,

where $n_1$% represents the molar content of element Ni in the positive electrode active material, based on the total molar amount of the positive electrode film layer; $n_2$% represents the molar content of element Me' in the positive electrode active material, based on the total molar amount of the positive electrode film layer; y% represents the percentage by weight of the second polymer, based on the total weight of the positive electrode film layer; optionally, 1%≤$n_1$%≤8%; and optionally, 30%≤$n_2$%≤45%.

According to a fourth aspect, an embodiment of the present application provides a secondary battery, including the positive electrode according to any embodiment of the third aspect.

According to a fifth aspect, an embodiment of the present application provides an electrical device, including the secondary battery according to any embodiment of the fourth aspect.

## BRIEF DESCRIPTION OF THE DRAWINGS

To describe the technical solutions of the embodiments of the present application more clearly, the following briefly introduces the accompanying drawings required for describing the embodiments of the present application. Apparently, the accompanying drawings in the following description show only some embodiments of the present application, and a person of ordinary skill in the art may still derive other drawings from these accompanying drawings without creative efforts.

FIG. 1 is a schematic diagram of an embodiment of a secondary battery according to the present application;
FIG. 2 is a schematic exploded view of an embodiment of a secondary battery shown in FIG. 1.
FIG. 3 is a schematic diagram of an embodiment of a battery module according to the present application.
FIG. 4 is a schematic diagram of an embodiment of a battery pack according to the present application.
FIG. 5 is a schematic exploded view of an embodiment of a battery pack shown in FIG. 4.
FIG. 6 is a schematic diagram of an embodiment of an electrical device including a secondary battery of the present application as a power source.

In the drawings, the components are not drawn to actual scale.

Reference numerals:

1. battery pack; 2. upper box body; 3. lower box body; 4. battery module;
5. secondary battery; 51. housing; 52. electrode assembly;
53. cover plate;
6. electrical device.

## DETAILED DESCRIPTION

Embodiments of a polymer and a preparation method therefor, a positive electrode, a secondary battery, and an electrical device of the present application are specifically disclosed in detail below. However, there are cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by a person skilled in the art. In addition, the accompanying drawings and the following descriptions are provided for a person skilled in the art to fully understand the present application, and are not intended to limit the subject matter described in the claims.

A "range" disclosed in the present application is defined in a form of a lower limit and an upper limit. A given range is defined by selecting a lower limit and an upper limit, and the selected lower limit and upper limit define boundaries of a particular range. A range defined in this manner may be inclusive or exclusive of end values, and may be arbitrarily combined, i.e., any lower limit may be combined with any upper limit to form a range. For example, if a range of 60 to 120 and a range of 80 to 110 are listed for a particular parameter, it is understood that a range from 60 to 110 and a range from 80

to 120 are also contemplated. In addition, if minimum range values of 1 and 2 are listed and maximum range values of 3, 4, and 5 are listed, the following ranges are all contemplated: 1 to 3, 1 to 4, 1 to 5, 2 to 3, 2 to 4, and 2 to 5. In the present application, unless otherwise specified, a numerical range "a to b" represents an abbreviated representation of any combination of real numbers between a to b, where both a and b are real numbers. For example, a numerical range "0 to 5" represents that all real numbers between "0 to 5" have been listed in this specification, and "0 to 5" is just an abbreviated representation of a combination of these numerical values. In addition, when it is stated that a parameter is an integer greater than or equal to 2, it is equivalent to disclosing that the parameter is, for example, an integer such as 2, 3, 4, 5, 6, 7, 8, 9, 10, 11, and 12.

Unless otherwise specified, all embodiments and optional embodiments of the present application may be combined with each other to form new technical solutions. Unless otherwise specified, all technical features and optional technical features of the present application may be combined with each other to form new technical solutions.

Unless otherwise specified, all steps of the present application may be performed sequentially or randomly, and preferably sequentially. For example, the phrase "the method includes step (a) and step (b)" means that the method may include step (a) and step (b) performed sequentially, or may include step (b) and step (a) performed sequentially. For example, the phrase "the method may further include step (c)" means that step (c) may be added to the method in any order. For example, the method may include step (a), step (b), and step (c), or may include step (a), step (c), and step (b), or may include step (c), step (a), and step (b).

Unless otherwise specified, the terms such as "include", "include", and their variants mentioned in the present application may be open-ended or closed-ended. For example, the terms such as "include", "comprise", and their variants may mean that other components not listed may be further included or comprised, or only the listed components may be included or comprised.

Unless otherwise specified, the term "or" is inclusive in the present application. For example, a phrase "A or B" means "A, B, or both A and B". More specifically, the condition "A or B" is satisfied when any one of the following conditions is satisfied: A is true (or present) and B is false (or absent); A is false (or absent) and B is true (or present); or both A and B are true (or present).

In the present application, the term "plurality of" or "at least one" indicates two or more.

A positive electrode usually includes a positive electrode current collector and a positive electrode film layer arranged on the positive electrode current collector. To prepare the positive electrode, a positive electrode active material, a binder, and the like are mixed into a positive electrode slurry, and the positive electrode slurry is applied to the positive electrode current collector, and cured to form a positive electrode film layer. The positive electrode slurry is a solid-liquid fluid mixture, the performance of which is similar to that of a non-Newtonian fluid. The relationship between the shear stress and shear strain rate of the non-Newtonian fluid is generally not linear, and the viscosity of non-Newtonian fluid has a trend of shear thinning or shear thickening.

In the related art, since the binder has a high binding strength to the positive electrode active material, agglomeration of the particles of the positive electrode active material may occur during the formation of the positive electrode active material, the binder, and the like into the positive electrode slurry. The agglomeration of the particles may clog the filter element during filtration of the positive electrode slurry. It is found through further research that even if there is no abnormality during the filtration of the positive electrode slurry, the slurry gelates when left standing because the active material has a large specific surface area BET and high surface energy, resulting in pipe blocking. The flexibility of the electrode obtained after the application and cure of the positive electrode slurry is poor, and the problem of cracking of the electrode after winding may occur. The above problems may affect the production of the positive electrode slurry, leading to reduced production efficiency.

In view of the above problems, embodiments of the present application provides a polymer that can be used as a dispersant in a positive electrode slurry to improve the stability of the dispersion of the particles of the positive electrode active material, thereby improving the processability of the positive electrode slurry. The dispersant can also increase the flexibility of the electrode while improving the processability of the slurry, thereby solving the problem of cracking of the electrode during winding, and improving the efficiency production of using the above positive electrode slurry.

The technical solutions of the present application will be described in detail below.

## First polymer

An embodiment of the present application provides a first polymer, which may be used as a dispersant. The first polymer includes a structural unit represented by formula (1) and a structural unit represented by formula (2).

The structural unit represented by formula (1) is as follows:

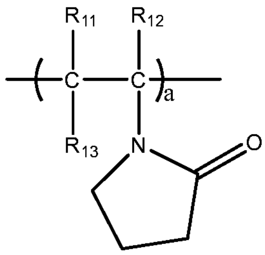
Formula (1),

where in formula (1), $R_{11}$, $R_{12}$, and $R_{13}$ each independently include a hydrogen atom or a substituted or unsubstituted C1-C5 alkyl group; and when substituted, the substituent includes a halogen atom.

Optionally, $R_{11}$, $R_{12}$, and $R_{13}$ each independently include a hydrogen atom or a substituted or unsubstituted C1-C3 alkyl group. For example, $R_{11}$, $R_{12}$, and $R_{13}$ each independently include a hydrogen atom, a methyl, or an ethyl.

The structural unit represented by formula (2) is as follows:

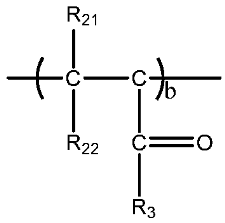
Formula (2),

where in formula (2), $R_{21}$ and $R_{22}$ each independently include a hydrogen atom or a substituted or unsubstituted C1-C5 alkyl group; and when substituted, the substituent includes a halogen atom.

Optionally, $R_{21}$ and $R_{22}$ each independently include a hydrogen atom or a substituted or unsubstituted C1-C3 alkyl group.

For example, $R_{21}$ and $R_{22}$ each independently include a hydrogen atom, a methyl, or an ethyl.

$R_3$ includes a hydroxyl-terminated polymer group.

The first polymer according to the embodiments of the present application includes a plurality of blocks, for example, a block including the structural unit represented by formula (1) and a block including the structural unit represented by formula (2). The plurality of blocks have a synergistic effect and can be bonded to the surface of the positive electrode active material through a $\pi$ - $\pi$-bond and a hydrogen bond, and the particles of the positive electrode active material are stably dispersed by means of spatial hindrance, so that the solid content in the positive electrode slurry can be increased, and the gelation phenomenon can be reduced. In addition, the first polymer can act on molecular chains of the binder, to reduce the crystallinity of the binder, thereby improving the flexibility of the positive electrode film layer. The first polymer, as a dispersant, can have a synergistic effect with the binder to improve the uniform dispersion of the particles of the positive electrode active material while ensuring the binding performance of the positive electrode slurry, thereby improving the stability of the positive electrode slurry, improving the processing performance of the positive electrode slurry, reducing the risk of cracking of the positive electrode, and improving the production efficiency of the positive electrode slurry.

In some embodiments, the structural unit represented by formula (1) includes one or more of structural units represented by formula (1-1) to formula (1-5):

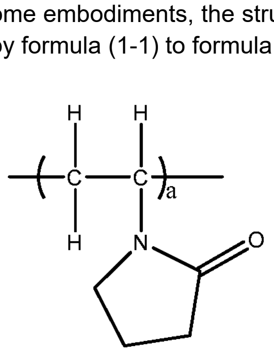
Formula (1-1),

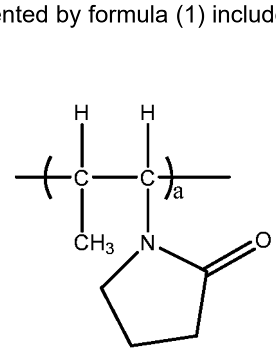
Formula (1-2),

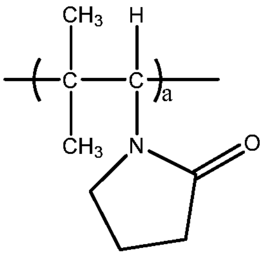 Formula (1-3), 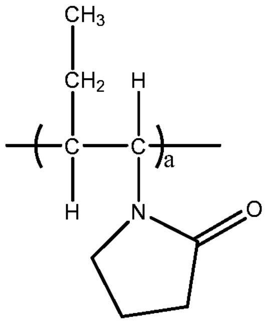 Formula (1-4),

and

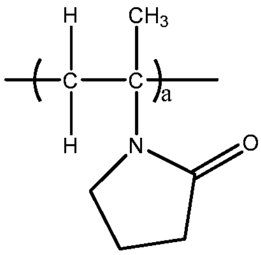 Formula (1-5).

In some embodiments, the structural unit represented by formula (2) includes one or more of structural units represented by formula (2-1) to formula (2-4):

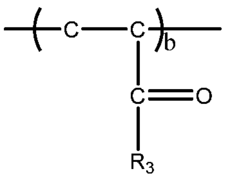 Formula (2-1), 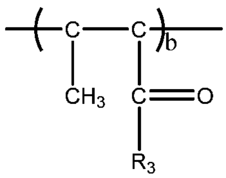 Formula (2-2),

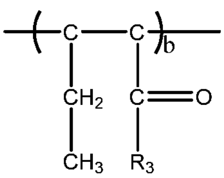 Formula (2-3), and 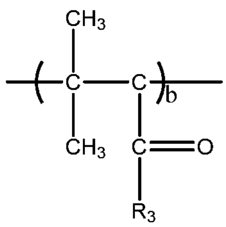 Formula (2-4).

By way of example, $R_3$ includes one or more of structural units represented by formula (3-1) to formula (3-4):

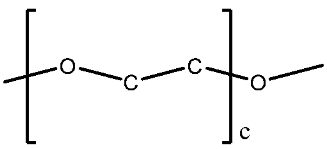 Formula (3-1), 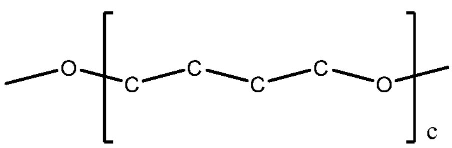 Formula (3-2),

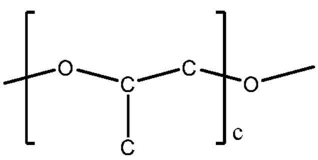 Formula (3-3), and 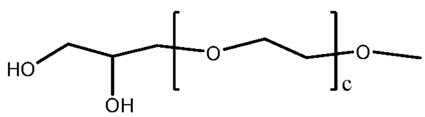 Formula (3-4).

The structural unit represented by formula (3-1) is a polyethylene oxide group or a polyethylene glycol group, which is obtained by removing a hydrogen atom from a terminal group from ethylene oxide, or is obtained by removing a hydrogen atom from a terminal group of polyethylene glycol group.

The structural unit represented by formula (3-2) is a polytetrahydrofuran group, which is obtained by removing a hydrogen atom from a terminal group of polytetrahydrofuran.

The structural unit represented by formula (3-3) is a polypropylene glycol group, which is obtained by removing a hydrogen atom from a terminal group of polypropylene glycol.

The structural unit represented by formula (3-4) is a polyoxypropylene triol group, which is obtained by removing a hydrogen atom from a terminal group of polyoxypropylene triol.

In an embodiment of the present application, a represents an average degree of polymerization of the structural unit represented by formula (1). b represents an average degree of aggregation of the structural unit represented by formula (2). c represents an average degree of aggregation of the structural unit represented by formula (3).

In some embodiments, a/b≥10. For example, a/b≥12, a/b≥15, a/b≥20, and so on. For example, a/b may be 10, 12, 15, 18, 20, 25, 30, 35, 40, etc., or a range formed by any two of the above values. When a/b falls within the above range, the dispersion effect of the first polymer can be further improved.

In some embodiments, 0.05≤a/c≤20. Optionally, 0.1≤a/c≤10. For example, a/c may be 0.05, 0.08, 0.10, 0.12, 0.20, 0.50, 1.0, 2.0, 3.0, 5.0, 8.0, 10.0, 12.0, 15.0, 18.0, 20.0, or a range formed by any two of the above values. When a/c falls within the above range, the dispersion stability of the slurry and the flexibility of the electrode can be further improved.

In some embodiments, a is a positive integer, and a includes a positive integer from 10 to 500. For example, a is 10 to 300, 50 to 200, 50 to 300, 50 to 400, 60 to 200, 60 to 300, 60 to 400, 60 to 500, 100 to 200, 100 to 300, etc.

In some embodiments, b is a positive integer, and b includes a positive integer from 1 to 500, optionally, a positive integer from 1 to 100. For example, b is 1 to 100, 2 to 200, 50 to 200, 50 to 300, 50 to 400, 60 to 200, 60 to 300, 60 to 400, 60 to 500, 100 to 200, 100 to 300, etc.

In some embodiments, c is a positive integer, and c includes a positive integer from 2 to 500. For example, c is 2 to 100, 2 to 200, 50 to 200, 50 to 300, 50 to 400, 60 to 200, 60 to 300, 60 to 400, 60 to 500, 100 to 200, 100 to 300, etc.

In some embodiments, the weight average molecular weight of the first polymer is $2\times10^3$ Da to $1\times10^5$ Da. Optionally, the weight average molecular weight of the first polymer is $2\times10^3$ Da to $6\times10^4$ Da. For example, the weight average molecular weight of the first polymer may be $2\times10^3$ Da, $5\times10^3$ Da, $1\times10^4$ Da, $2\times10^4$ Da, $3\times10^4$ Da, $3.5\times10^4$ Da, $3.7\times10^4$ Da, $4\times10^4$ Da, $5\times10^4$ Da, $5.5\times10^4$ Da, $5.6\times10^4$ Da, $5.7\times10^4$ Da, $8\times10^4$ Da, $1\times10^5$ Da, or a range formed by any two of the above values.

When the weight average molecular weight of the first polymer is within the above range, the weight average molecular weight of the first polymer is relatively low, and a good dispersion effect can be achieved.

In an embodiment of the present application, the weight average molecular weight of the polymer may be determined according to a method specified by GB/T 21863-2008, for example, by a Gel Permeation Chromatgraphy (GPC) test. Specifically, the test is performed using a GPC1515 instrument from Waters, US. The sample is dissolved in tetrahydrofuran for 12 h or more. The concentration of the sample is 4 mg/mL. The sample is filtered. The test is performed at a temperature of 25 °C and at flow rate of 1 mL/min.

## Method for preparing first polymer

An embodiment of the present application further provides a method for preparing a first polymer, including the following steps.

In step S110, a first monomer is provided and polymerized to form a first copolymer. The first monomer includes a compound represented by formula (I).

In step S120, a second monomer is added to the first copolymer for polymerization to form a second copolymer, where a terminal group of the second copolymer includes a carboxyl group.

In step S130, a hydroxyl-terminated polymer is added to the second copolymer for esterification to form a first polymer.

In step S110, in some embodiments, the first monomer includes a compound represented by formula (I):

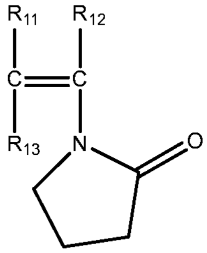
Formula (I),

where in formula (I), $R_{11}$, $R_{12}$, and $R_{13}$ each independently include a hydrogen atom or a substituted or unsubstituted C1-C5 alkyl group; and when substituted, the substituent includes a halogen atom. Optionally, $R_{11}$, $R_{12}$, and $R_{13}$ each independently include a hydrogen atom or a substituted or unsubstituted C1-C3 alkyl group.

In some embodiments, the compound represented by formula (I) includes one or more of compounds represented by formula (I-1) to formula (I-5):

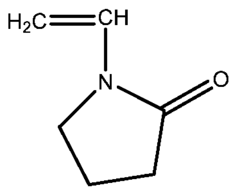
Formula (I-1),
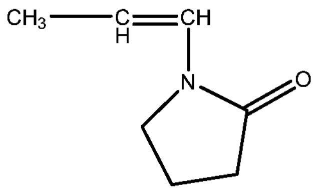
Formula (I-2),

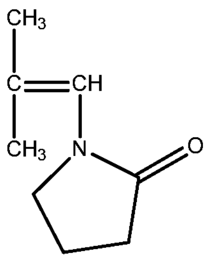
Formula (I-3),
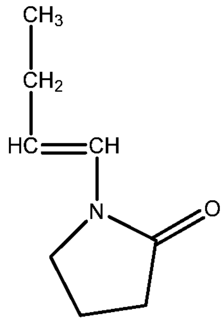
Formula (I-4),

and

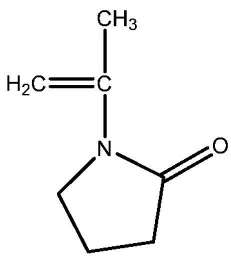
Formula (I-5).

In some embodiments, in step S120, the second monomer includes a compound represented by formula (II):

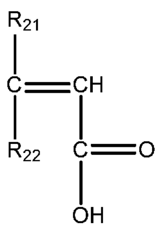
Formula (II),

where in formula (II), $R_{21}$ and $R_{22}$ each independently include a hydrogen atom or a substituted or unsubstituted C1-C5 alkyl group; and when substituted, the substituent includes a halogen atom. Optionally, $R_{21}$ and $R_{22}$ each independently include a hydrogen atom or a substituted or unsubstituted C1-C3 alkyl group.

For example, the second monomer includes one or more of acrylic acid, n-butenoic acid, hexenoic acid, n-pentenoic acid, isopentenic acid, n-hexenoic acid, isohexenoic acid, n-heptenoic acid, isoheptenoic acid, etc.

In some embodiments, in step S130, the hydroxyl-terminated polymer includes one or more of polytetrahydrofuran, polyethylene oxide, polyethylene glycol, polypropylene glycol, and polyoxypropylene triol.

In some embodiments, in step S110, the reaction temperature is 50°C to 60°C. For example, the reaction temperature may be 50°C, 52°C, 55°C, 58°C, 60°C, or a range formed by any two of the above values.

In some embodiments, in step S110, the reaction time ranges from 5 h to 6 h. For example, the reaction time may be 5 h, 5.2 h, 5.5 h, 5.8 h, 6 h, or a range formed by any two of the above values.

When the reaction temperature and /or the reaction time of step S110 satisfies the above ranges, the degree of polymerization of the first monomer can be increased.

In some embodiments, in step S120, the reaction temperature is 50°C to 60°C. For example, the reaction temperature may be 50°C, 52°C, 55°C, 58°C, 60°C, or a range formed by any two of the above values.

In some embodiments, in step S120, the reaction time ranges from 5 h to 6 h. For example, the reaction time may be 5 h, 5.2 h, 5.5 h, 5.8 h, 6 h, or a range formed by any two of the above values.

When the reaction temperature and /or the reaction time of step S120 satisfies the above ranges, the degree of polymerization of the first monomer and the first copolymer can be increased.

In some embodiments, in step S130, the reaction temperature is 50°C to 60°C. For example, the reaction temperature may be 50°C, 52°C, 55°C, 58°C, 60°C, or a range formed by any two of the above values.

In some embodiments, in step S130, the reaction time ranges from 5 h to 6 h. For example, the reaction time may be 5 h, 5.2 h, 5.5 h, 5.8 h, 6 h, or a range formed by any two of the above values.

In some embodiments, step S130 further includes a catalyst for the esterification reaction, which may include one or more of sulfuric acid, hydrochloric acid, p-toluenesulfonic acid, and thionyl chloride.

When the reaction temperature and /or the reaction time in step S130 satisfies the above ranges, the degree of polymerization of the hydroxyl-terminated polymer and the second copolymer can be increased.

In some embodiments, before step S110, the method further includes step S140: formulating a chain transfer solution. Specifically, an initiator and a chain transfer reagent are dissolved in a solvent, and stirred under an inert atmosphere to obtain the chain transfer solution. For example, the initiator may include azobisisobutyronitrile (AIBN), persulfate, and the like. The solvent may include one or more of dioxane, 1,4-dioxane, N,N-dimethylformamide, or a mixture of 1,4-dioxane and water.

In some embodiments, the chain transfer reagent includes at least one of S,S'-bis($\alpha$,$\alpha$'-methyl-$\alpha$"-acetic acid) trithiocarbonate, diisopropyl xanthate disulfide, and the like.

As a specific embodiment of preparing the first polymer in the present application, the method includes the following steps. An initiator azobisisobutyronitrile (AIBN) and a chain transfer reagent are dissolved in a solvent dioxane, and stirred for 1 h under nitrogen atmosphere to obtain a chain transfer solution. A first monomer such as N-vinylpyrrolidone (NVP) is added to the chain transfer solution for a first copolymerization reaction, which occurs at a reaction temperature of 50°C to 60°C for a reaction time of 6 h. After the first copolymerization reaction is completed, a second monomer such as acrylic acid is added to the system for a second copolymerization reaction, which occurs for a reaction time of 6 h. After the second copolymerization reaction is completed, an esterification reaction catalyst and a hydroxyl-terminated polymer such as polytetrahydrofuran are added for an esterification reaction with the product of the second copolymerization (i.e., the second copolymer) to give a product, i.e., the first polymer. After the resulting product is separated and dried, the first polymer may be further purified.

## Second polymer

An embodiment of the present application provides a second polymer, which may be used as a binder. The second polymer includes a compound represented by formula (4):

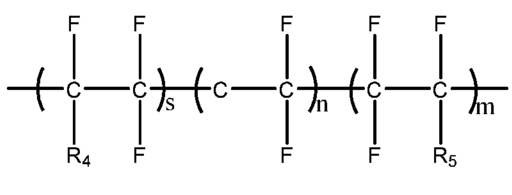

Formula (4),

where in formula (4),

$R_4$ and $R_5$ each independently include a fluorine atom or a C1-C5 perfluoroalkyl group. Optionally, $R_4$ and $R_5$ each independently include a fluorine atom or a C1-C3 perfluoroalkyl group. Further optionally, $R_4$ and $R_5$ each independently include a flourine atom or a perfluoromethyl methyl. For example, $R_4$ and $R_5$ independently include a fluorine atom, a perfluoromethyl group, a perfluoroethyl group, a perfluoro-n-propyl group, a perfluoroisopropyl group, a perfluoro-n-butyl group, a perfluoroisobutyl group, a perfluoro-n-pentyl group, or a perfluoroisopentyl group.

In some embodiments, n>s.

In some embodiments, n>m.

Since the molecular weight of the middle segment of the molecular chain of the second polymer is larger than the molecular weights of the two ends of the molecular chain of the second polymer, the intermolecular force between the second polymer and the particles of the positive electrode active material can be further reduced, thereby further reducing the risk of agglomeration of the particles of the positive electrode active material.

s includes a positive integer from 1 to 1000. For example, s may be 1, 10, 20, 50, 100, 200, 300, 400, 500, 600, 700, 800, 900, 1000, or a range formed by any two of the above values.

n includes a positive integer from 9000 to 13000. For example, n may be 9000, 10000, 11000, 12000, 13000, or a range formed by any two of the above values.

m includes a positive integer from 1 to 1000. For example, m may be 1, 10, 20, 50, 100, 200, 300, 400, 500, 600, 700, 800, 900, 1000, or a range formed by any two of the above values.

According to the second polymer of the embodiments of the present application, the middle segment of the molecular chain of the second polymer has a structure obtained by homopolymerization of vinylidene fluoride, and the chain end of the middle segment can be copolymerized with a perfluoroolefin, i.e., a perfluoromonomer structure is introduced at the head and tail ends of the molecular chain. Because the carbon chain of the middle segment is zigzag-shaped, adjacent fluorine atoms repel each other, so that the fluorine atoms are not in the same plane and are distribute helically along the carbon chain. Therefore, the carbon chain is surrounded by a series of stable fluorine atoms, which makes the carbon chain not easily destroyed, showing very high chemical stability and thermal stability. Because the middle segment is homopolymerized by vinylidene fluoride, the middle segment has high crystallinity and good binding performance. Introducing a perfluoromonomer structure at the head and tail ends of the molecular chain, i.e., introducing copolymerization means can reduce the crystallinity of the entire polymer to a certain extent, thereby slightly reducing the binding performance of the entire polymer, but still ensuring the binding performance required for the second polymer to serve as a binder. Moreover, since the intermolecular force such as hydrogen bonding between the second polymer and the positive electrode active material is relatively weak, agglomeration between the particles of the positive electrode active material is not easily caused, and the dispersion effect of the positive electrode slurry is more stable, thereby improving the performance of the positive electrode film layer and improving the uniformity of the performance of the positive electrode film layer. Further, the second polymer, as a binder, can have a synergistic effect with the first polymer to improve the uniform dispersion of the particles of the positive electrode active material while improving the binding performance of the positive electrode slurry, thereby improving the stability of the positive electrode slurry.

In some embodiments, the second polymer includes one or more of compounds represented by formula (4-1) to formula (4-5):

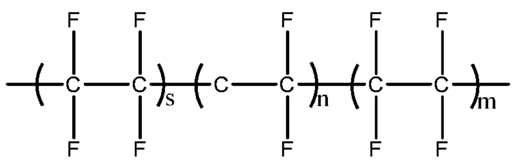

Formula (4-1),

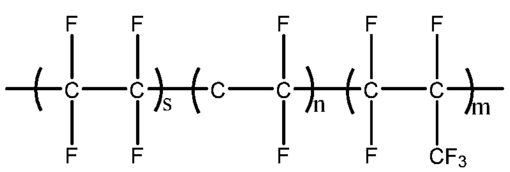

Formula (4-2),

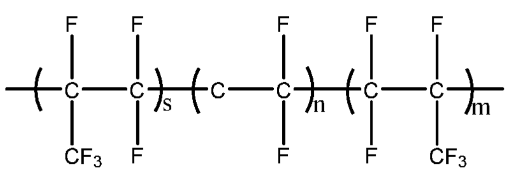

Formula (4-3),

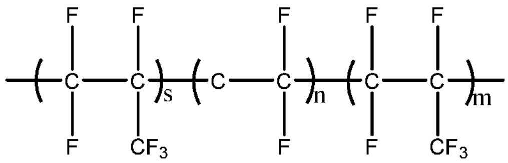

Formula (4-4),

and

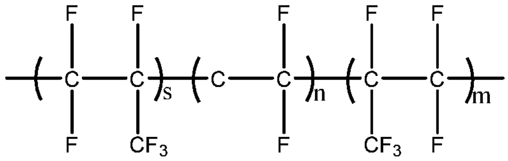

Formula (4-5).

In some embodiments, In some embodiments, the weight average molecular weight of the second polymer is $6\times10^5$ Da to $1\times10^6$ Da. Optionally, the weight average molecular weight of the second polymer is $6\times10^5$ Da to $8\times10^5$ Da. For example, the weight average molecular weight of the second polymer may be $6\times10^5$ Da, $6.5\times10^5$ Da, $7\times10^5$ Da, $7.5\times10^5$ Da, $8\times10^5$ Da, $9\times10^5$ Da, $9.5\times10^5$ Da, $1\times10^6$ Da, or a range formed by any two of the above values.

When the weight average molecular weight of the second polymer falls within the above ranges, the weight average molecular weight of the second polymer is relatively low, leading to reduced binding performance of the second polymer. In this way, the intermolecular force between the second polymer and the particles of the positive electrode active material can be further reduced while ensuring the binding performance of the second polymer, thereby further reducing the risk of agglomeration of the particles of the positive electrode active material.

**Method for preparing second polymer**

An embodiment of the present application further provides a method for preparing a second polymer. The method includes the following steps.

In step S210, a vinylidene fluoride monomer is provided and polymerized in the presence of an initiator to form an intermediate homopolymer.

In step S220, a third monomer is added to the intermediate homopolymer, and the third monomer and the intermediate homopolymer are polymerized in the presence of an initiator to form a second polymer, where the third monomer includes a C2-C7 perfluoroolefin. Optionally, the third monomer includes a C2-C5 perfluoroolefin. Further optionally, the third monomer includes tetrafluoroethylene or hexafluoropropylene. For example, the third monomer includes one or more of perfluoroethylene, perfluoropropylene, perfluoro-n-butene, perfluoroisobutene, perfluoro-n-pentene, perfluoroisopentene, perfluoro-n-hexene, perfluoro-isohexene, perfluoro-n-heptene, perfluoroisoheptene, and the like.

In some embodiments, based on the total weight of the vinylidene fluoride monomer and the third monomer, the percentage by weight of the third monomer is m%, where $0<m\leq1$. For example, the percentage by weight of the third monomer may be 0.1%, 0.2%, 0.5%, 0.6%, 0.8%, 0.9%, 1.0%, or a range formed by any two of the above values.

In the preparation method of the present application, the polymerization may be maintained under inert atmosphere, for example, under an inert gas atmosphere such as nitrogen or argon.

In some embodiments, the polarization time of the vinylidene fluoride monomer ranges from 12 h to 18 h. For example, the polarization time of the vinylidene fluoride monomer may be 12 h, 13 h, 15 h, 16 h, 17 h, 18 h, or a range formed by any two of the above values.

In some embodiments, the polarization time of the third monomer and the intermediate homopolymer ranges from 2 h to 4 h. For example, the polarization time of the third monomer and the intermediate homopolymer may be 2 h, 2.5 h, 3 h, 4 h, or a range formed by any two of the above values.

In step S210, the initiator may include an inorganic peroxide and /or an organic peroxide, the inorganic peroxide may include a persulfate or the like, and the organic peroxide may include peroxycarbonate, tert-butylhydroperoxide, or the like.

For example, a preparation process in the embodiments of the present application is as follows: introducing nitrogen gas into a closed high-pressure stirred reactor, and performing vacuuming until oxygen gas is completely replaced by nitrogen gas in the closed high-pressure stirred reactor. While stirring at a rotational speed of, for example, 50 r/min, a certain amount (e.g., 1/4 to 2/3 of the volume of the reactor) of deionized water, emulsifier, initiator, and other auxiliary agents is added into the reactor, and the vinylidene fluoride monomer is added to a certain pressure, e.g., 2 MPa to

3.8 MPa, and the mixture is heated to a temperature of, for example, 50°C to 90°C to start polymerization. During the polymerization process, the pressure in the reactor is kept stable by continuously adding the polymerizable monomer. The third monomer is added to participate in the polymerization at the later stage of the reaction. After the polymerization is completed, the product is obtained by separation, washing, drying, and other methods.

## Positive electrode slurry

An embodiment of the present application further provides a positive electrode slurry. The positive electrode slurry includes a positive electrode active material, a binder, and a dispersant. The dispersant may include the first polymer described in any of the above embodiments, to improve the dispersion effect of the particles of the positive electrode active material, thereby improving the uniformity of the performance of the positive electrode film layer.

In some embodiments, the binder may include the second polymer described in any of the above embodiments. The second polymer can have a synergistic effect with the first polymer to improve the uniform dispersion of the particles of the positive electrode active material while ensuring the binding performance of the positive electrode slurry, thereby improving the stability of the positive electrode slurry.

In some other embodiments, the binder may be a conventional positive electrode binder. By way of example, the positive electrode binder may include one or a combination of more than one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin.

In some embodiments, based on the total weight of the positive electrode slurry, the content in percentage by weight of the first polymer is p%, where $0.02 \leq p \leq 1$. Optionally, $0.05 \leq p \leq 0.60$.

In some embodiments, based on the total weight of the positive electrode slurry, the content in percentage by weight of the second polymer is q%, where $0.8 \leq q \leq 2.0$. Optionally, $1.0 \leq q \leq 1.6$.

## Positive electrode

An embodiment of the present application further provides a positive electrode. The positive electrode includes a positive electrode current collector and a positive electrode film layer arranged on at least one surface of the positive electrode current collector. For example, the positive electrode current collector has two opposite surfaces in a thickness direction thereof, and the positive electrode film layer is arranged on either or both of the two opposite surfaces of the positive electrode current collector. The positive electrode film layer includes a positive electrode active material, a binder, and a dispersant. The dispersant may include the first polymer described in any of the above embodiments, to improve the dispersion effect of the particles of the positive electrode active material, thereby improving the uniformity of the performance of the positive electrode film layer.

In some embodiments, the binder may be a conventional binder. By way of example, the positive electrode binder may include one or a combination of more than one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin. In some embodiments, based on the total weight of the positive electrode film layer, the content in percentage by weight of the positive electrode binder is 5% or less.

In some other embodiments, the binder may include the second polymer described in any of the above embodiments.

According to the positive electrode of the embodiments of the present application, the second polymer has a certain viscosity, can provide binding performance to the positive electrode slurry, and the intermolecular force between the second polymer and the positive electrode active material is weak and is not likely to cause agglomeration of the particles of the positive electrode active material, so that the stability of the positive electrode slurry can be improved. However, the second polymer may cause problems such as low solid content of the positive electrode slurry and gelation when left standing. The first polymer can be bonded to the surface of the positive electrode active material through a $\pi$ - $\pi$-bond and a hydrogen bond, and the particles of the positive electrode active material are stably dispersed by means of spatial hindrance, so that the solid content in the positive electrode slurry can be increased, and the gelation phenomenon can be reduced. In addition, the first polymer can act on the molecular chains of the second polymer to lower the crystallinity of the second polymer, thereby improving the flexibility of the positive electrode film layer, and improving the mechanical property of the positive electrode film layer. Therefore, the first polymer and the second polymer have a synergistic effect to jointly improve the stability and uniformity of the positive electrode slurry, thereby improving the stability and mechanical properties of the positive electrode film layer.

In some embodiments, based on the total weight of the positive electrode film layer, the content in percentage by weight of the first polymer is x%, where $0.02 \leq x \leq 1$; and optionally, $0.05 \leq x \leq 0.60$.

When the content in percentage by weight of the first polymer falls within the above range, the particles of the positive electrode active material can be uniformly dispersed in addition to binding the particles of the positive electrode active material with the binder, and the brittleness problem of the positive electrode can be improved, and the flexibility of the positive electrode can be further improved, thereby improving the mechanical properties of the entire positive electrode. For example, the percentage by weight of the first monomer may be 0.02%, 0.03%, 0.04%, 0.05%, 0.06%, 0.08%, 0.10%, 0.12%, 0.15%, 0.18%, 0.20%, 0.30%, 0.40%, 0.50%, 0.60%, 0.70%, 0.80%, 1%, or a range formed by any two of the above values.

In some embodiments, based on the total weight of the positive electrode film layer, the content in percentage by weight of the second polymer is y%, where $0.8 \leq y \leq 2.0$. Optionally, $1.0 \leq y \leq 1.6$.

When the content in percentage by weight of the second polymer falls within the above range, the particles of the positive electrode active material, the conductive agent, and the like in the positive electrode slurry can be bonded, so that the particles of the positive electrode active material are less likely to be deposited. In addition, the positive electrode slurry has good flowability and leveling property, facilitating its curing to form a positive electrode film layer on the positive electrode current collector, and the internal adhesion of the formed positive electrode film layer is not excessively strong, so that the flexibility of the positive electrode can be improved, and the mechanical property of the entire positive electrode can be improved. For example, the percentage by weight of the second monomer may be 0.8%, 0.9%, 1.0%, 1.1%, 1.2%, 1.3%, 1.4%, 1.5%, 1.6%, 1.7%, 1.8%, 1.9%, 2.0%, or a range formed by any two of the above values.

In the embodiments of the present application, the percentages by weight of the first polymer and the second polymer may be measured by thermogravimetric analysis (TG), and the relationship between the weight of the sample and the temperature change may be measured with programed temperature control.

In some embodiments, the positive electrode active material may be a positive electrode active material well-known in the art for use in a secondary battery. By way of example, the positive electrode active material may include at least one of the following materials, a layered positive electrode active material (e.g., ternary, lithium/sodium nickelate, lithium/sodium cobaltate, lithium/sodium manganate, lithium/sodium-rich, and rock-salt phase layered materials, etc.), an olivine-type phosphate active material, and a spinel positive electrode active material (e.g., spinel lithium manganate, spinel lithium nickel manganese oxide, lithium-rich spinel lithium manganate, lithium-rich lithium nickel manganese oxide, etc.).

For example, the layered positive electrode active material includes a first active material having a general formula of $Li_{x1}A_{y1}Ni_{a1}Co_{b1}Mn_{c1}M_{(1-a1-b1-c1)}Y_{z1}$, where $0 \leq x1 \leq 2.1$, $0 \leq y1 \leq 2.1$, and $0.9 \leq x1+y1 \leq 2.1$; $0 < a1 \leq 1$, $0 < b1 \leq 1$, $0 < c1 \leq 1$, and $0.1 \leq a1+b1+c1 \leq 1$;$1.8 \leq z1 \leq 3.5$; A includes one or more of Na, K, and Mg; M includes one or more of B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce; and Y' includes one or more of O and F. Specifically, the layered positive electrode active material may include lithium cobaltate LCO, lithium nickelate LNO, lithium manganate LMO, etc.

Optionally, the layered positive electrode active material is a ternary material. For example, $0 < a \leq 1$, $0 < b \leq 1$, and $0 < c \leq 1$. For example, the layered positive electrode active material includes one or more of $LiNi_{1/3}Co_{1/3}Mn_{1/3}O_2$ (NCM333), $LiNi_{0.8}Co_{0.1}Mn_{0.1}O_2$ (NCM811), and $LiNi_{0.5}Co_{0.2}Mn_{0.3}O_2$ (NCM523).

For example, the olivine-type phosphate active material includes a second active material having a general formula of $Li_{x2}A'_{y2}Me'_{a2}M'_{b2}P_{1-c2}X'_{c2}Y'_{z2}$, where $0 \leq x2 \leq 1.3$, $0 \leq y2 \leq 1.3$, and $0.9 \leq x2+y2 \leq 1.3$; $0.9 \leq a2 \leq 1.5$, $0 \leq b2 \leq 0.5$, and $0.9 \leq a2+b2 \leq 1.5$; $0 \leq c2 \leq 0.5$; $3 \leq z2 \leq 5$; A' includes one or more of Na, K, and Mg; Me' includes one or more of Mn, Fe, Co, and Ni; M' includes one or more of B, Mg, Al, Si, P, S, Ca, Sc, Ti, V, Cr, Cu, Zn, Sr, Y, Zr, Nb, Mo, Cd, Sn, Sb, Te, Ba, Ta, W, Yb, La, and Ce; X' includes one or more of S, Si, Cl, B, C, and N; and Y' includes one or more of O and F. Specifically, the olivine-type phosphate active material includes one or more of $LiFePO_4$, $LiMn_{0.6}Fe_{0.4}PO_4$, $LiMn_{0.5}Fe_{0.5}PO_4$, $LiNiPO_4$, and $LiCoPO_4$.

In some embodiments, the olivine-type phosphate active material may further include one or more of $Li_{0.999}Mn_{0.60}Fe_{0.393}V_{0.004}Co_{0.003}P_{0.999}S_{0.001}O_4$ and $Li_{0.994}Mo_{0.001}Mn_{0.65}Fe_{0.35}P_{0.999}Si_{0.001}O_{3.999}F_{0.001}$.

For example, the spinel positive electrode active material has a general formula of $Li_{x3}A"_{y3}Mn_{a3}M"_{2-a3}Y"_{z3}$, where $0 \leq x3 \leq 2$, $0 \leq y3 \leq 1$, and $0.9 \leq x3+y3 \leq 2$; $0.5 \leq a3 \leq 2$; $3 \leq z3 \leq 5$; A' includes one or more of Na, K, and Mg; M includes one or more of Ni, Co, B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce; and Y' includes one or more of O and F. Specifically, the spinel positive electrode active material includes one or more of $LiMn_2O_4$, $LiNi_{0.5}Mn_{1.5}O_4$, $LiCr_{0.3}Mn_{1.7}O_4$, $Li_{1.1}Al_{0.1}Mn_{1.9}O_4$, $Li_2Mn_2O_4$, and $Li_{1.5}Mn_2O_4$.

In some embodiments, the positive electrode active material includes a first active material and a second active material. The first active material includes a ternary material, and the second active material includes an olive-type phosphate active material. The first polymer has high adaptability to the olivine-type phosphate active material, and the intermolecular force between the second polymer and the particles of the olivine-type phosphate active material is weak and is not likely to cause particle agglomeration. Moreover, the first polymer has high adaptability to a ternary material, and the intermolecular force between the second polymer and the particles of the ternary material is weak and is not likely to cause particle agglomeration. The uniformity of dispersion of the particles of the first active material and the second active material can be improved.

In some embodiments, the first active material includes element Ni.

The second active material includes element Me', where Me' includes one or more of Mn, Fe, Co, and Ni.

In some embodiments, the positive electrode further satisfies: $0.03\% < \frac{n_1\%}{n2\%} \times y \leq 0.4\%$ ; optionally, $0.14\% < \frac{n_1\%}{n2\%} \times y \leq 0.37\%$ , further optionally, $0.20\% < \frac{n_1\%}{n2\%} \times y \leq 0.30\%$ ,

In the formula,

$n_1$% represents the molar content of element Ni in the positive electrode active material, based on the total molar amount of the positive electrode film layer;
$n_2$% represents the molar content of element Me' in the positive electrode active material, based on the total molar amount of the positive electrode film layer; and
y% represents the percentage by weight of the second polymer.

When the positive electrode of the embodiments of the present application satisfies the above relational expressions, the second polymer can bind the first active material and the second active material, and agglomeration of the particles of the positive electrode active material is less likely to occur, so that the stability of the positive electrode film layer can be further improved.

In some embodiments, $1\% \leq n_1\% \leq 8\%$, and optionally, $n_1$ ranges from 5% to 7%. For example, $n_1$% may be 1%, 2%, 3%, 5%, 6%, 7%, 8%, or a range formed by any two of the above values.

In some embodiments, $30\% \leq n_2\% \leq 45\%$, and optionally, $n_2$ ranges from 33% to 37%. For example, $n_2$% may be 30%, 31%, 33%, 35%, 37%, 39%, 40%, 42%, 45%, or a range formed by any two of the above values.

In some embodiments, the positive electrode current collector may be a metal foil or a composite current collector. For example, the metal foil may be an aluminum foil or an aluminum alloy foil. The composite current collector may include a polymer material base layer and a metal layer formed on at least one surface of the polymer material base layer. By way of example, the metal material may include one or a combination of more than one of aluminum, an aluminum alloy, nickel, a nickel alloy, titanium, a titanium alloy, silver, and a silver alloy. The polymer material base layer may include one or a combination of more than one of polypropylene (PP), polyethylene terephthalate (PET), polybutylene terephthalate (PBT), polystyrene (PS), and polyethylene (PE).

In some embodiments, the positive electrode film layer further optionally includes a positive electrode conductive agent. The type of the positive electrode conductive agent is not particularly limited in the present application. By way of example, the positive electrode conductive agent may include one or a combination of more than one of superconducting carbon, conductive carbon black, conductive graphite, acetylene black, carbon black, Ketjen black, carbon dots, carbon nanotubes, graphene, and carbon nanofibers. In some embodiments, based on the total weight of the positive electrode film layer, the content in percentage by weight of the positive electrode conductive agent is 5% or less.

The positive electrode film layer is usually formed by applying a positive electrode slurry on the positive electrode current collector, followed by drying and cold pressing. The positive electrode slurry is usually formed by dispersing a positive electrode active material, an optional conductive agent, an optical binder, and any other components in a solvent and stirring the mixture uniformly.

In some embodiments, the positive electrode is prepared through the following steps: providing a positive electrode current collector; and mixing a positive electrode active material, a first polymer, a second polymer, and a conductive agent in a solvent to form a positive electrode slurry, and applying the positive electrode slurry to the positive electrode current collector, followed by drying, cold pressing, and other processes to obtain a positive electrode. The solvent may be, but is not limited to, N-methyl pyrrolidone (NMP).

## Secondary battery

An embodiment of the present application further provides a secondary battery including a positive electrode, a negative electrode, a separator arranged between the positive electrode and the negative electrode, and an electrolyte solution. The positive electrode is the positive electrode according to any of the above embodiments of the present application. Through the improvement of the first polymer, especially through the joint improvement of the first polymer and the second polymer, the positive electrode has more uniform performance and better mechanical properties, thereby improving the cycle performance of the secondary battery.

[Negative electrode]

The negative electrode includes a negative electrode current collector and a negative electrode film layer arranged on at least one surface of the negative electrode current collector. The negative electrode film layer includes a

negative electrode active material.

By way of example, the negative electrode current collector has two opposite surfaces in a thickness direction thereof, and the negative electrode film layer is arranged on either or both of the two opposite surfaces of the negative electrode current collector.

In some embodiments, the negative electrode current collector may be a metal foil or a composite current collector. For example, the metal foil may be a copper foil. The composite current collector may include a polymer material base layer and a metal layer formed on at least one surface of the polymer material base layer. The composite current collector may be formed by forming a metal material (e.g., copper, a copper alloy, nickel, a nickel alloy, titanium, a titanium alloy, silver, or a silver alloy) on a polymer material substrate (e.g., a substrate of polypropylene (PP), polyethylene terephthalate (PET), polybutylene terephthalate (PBT), polystyrene (PS), or polyethylene (PE)).

In some embodiments, the negative electrode active material may be a negative electrode active material well-known in the art for use in a battery. By way of example, the negative electrode active material may include at least one of the following materials: artificial graphite, natural graphite, soft carbon, hard carbon, a silicon-based material, a tin-based material, lithium titanate, etc. The silicon-based material may include at least one of elemental silicon, a silicon-oxygen compound, a silicon-carbon composite, a silicon-nitrogen composite, and a silicon alloy. The tin-based material may include at least one of elemental tin, a tin-oxide compound, and a tin alloy. However, the present application is not limited to these materials, and other conventional materials that can be used as a negative electrode active material of a battery may also be used. These negative electrode active materials may be used alone or in combination.

In some embodiments, the negative electrode film layer optionally further includes a negative electrode binder. The binder negative electrode may include at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer optionally further includes a conductive agent. The conductive agent may include at least one of superconducting carbon, acetylene black, carbon black, Ketjen black, carbon dots, carbon nanotubes, graphene, and carbon nanofibers.

In some embodiments, the negative electrode film layer optionally further includes other auxiliary agents, for example, a thickener (e.g., sodium carboxymethyl cellulose (CMC-Na)).

In some embodiments, the negative electrode may be prepared in the following manner. The components for preparing the negative electrode, such as the negative electrode active material, the conductive agent, the binder, and any other component, are dispersed in a solvent (e.g., deionized water) to form a negative electrode slurry. The negative electrode slurry is coated on the negative electrode current collector, followed by drying, cold pressing, and other processes, to obtain the negative electrode.

[Electrolyte]

The electrolyte serves to conduct ions between the positive electrode and the negative electrode. The type of the electrolyte is not particularly limited in the present application, and may be selected according to requirements. For example, the electrolyte may be in a liquid, gel, or fully-solid state.

In some embodiments, the electrolyte is in the form of an electrolyte solution. The electrolyte solution includes an electrolyte salt and a solvent.

By way of example, the lithium salt may include one or a combination of more than one of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bis(trifluoromethanesulfonyl)imide (LiTFSI), lithium trifluoromethanesulfonate (LiTFS), lithium difluorooxalate borate (LiDFOB), lithium bis(oxalato)borate (LiBOB), lithium difluorophosphate ($LiPO_2F_2$), lithium difluorobis(oxalato)phosphate (LiDFOP), and lithium tetrafluoro(oxalato)phosphate (LiTFOP).

By way of example, the lithium salt may include one or a combination of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS), and diethyl sulfone (ESE).

In some embodiments, the electrolyte solution optionally further includes an additive. For example, the additive may include a negative electrode film-forming additive and a positive electrode film-forming additive, and may also include an additive that can improve certain properties of the battery, e.g., an additive that improves the overcharge performance of the battery, an additive that improves the high-temperature performance or low-temperature performance of the battery, etc.

[Separator]

In some embodiments, the secondary battery further includes a separator. The type of the separator is not particularly limited in the present application, and any well-known separator of a porous structure having good chemical stability and mechanical stability may be used.
In some embodiments, the material of the separator may include at least one of glass fiber, non-woven cloth, polyethylene, polypropylene, and polyvinylidene fluoride. The separator may be a single-layer film or a multi-layer composite film, which is not particularly limited herein. When the separator is a multi-layer composite film, the layers may be of the same or different materials, which is not particularly limited herein.
In some embodiments, the positive electrode, the negative electrode, and the separator may be made into an electrode assembly by a winding process or a lamination process.
The shape of the secondary battery is not particularly limited in the present application, and may be a cylinder, a rectangle, or any other shape. For example, FIG. 1 shows a secondary battery 5 having a rectangle structure as an example.
In some embodiments, referring to FIG. 1 and FIG. 2, the outer package may include a housing 51 and a cover plate 53. The housing 51 may include a bottom plate and side plates connected to the bottom plate, and the bottom plate and the side plates enclose an accommodating cavity. The housing 51 has an opening in communication with the accommodating cavity, and the cover plate 53 can cover the opening, to close the accommodating cavity. The positive electrode, the negative electrode, and the separator may be made into an electrode assembly 52 by a winding process or a lamination process. The electrode assembly 52 is encapsulated in the accommodating cavity. The electrode assembly 52 is infiltrated by the electrolyte solution. The number of electrode assemblies 52 included in the secondary battery 5 may be one or more, and may be determined according to requirements.
A method for preparing the secondary battery of the present application is well-known. In some embodiments, the positive electrode, the separator, the negative electrode, and the electrolyte solution may be assembled into a battery module. By way of example, the positive electrode, the separator, and the negative terminal may be wound or laminated to form an electrode assembly, the electrode assembly is placed in an outer package and dried, followed by the injection of the electrolyte solution and processes such as vacuum encapsulation, standing, formation, aging, and the like, to obtain a secondary battery.
In some embodiments of the present application, the secondary battery of the present application may be assembled into a battery module, and the number of secondary batteries included in the battery module may be more than one, which may be specifically adjusted based on the application and capacity of the battery module.
FIG. 3 is a schematic diagram of a battery module 4 as an example. Referring to FIG. 3, in the battery module 4, a plurality of secondary batteries 5 may be sequentially arranged in a length direction of the battery module 4. Certainly, the plurality of secondary batteries 5 may also be arranged in any other manner. Further, the plurality of secondary batteries 5 may be fixed by a fastener.
Optionally, the battery module 4 may further include a casing having an accommodating space, and the plurality of secondary batteries 5 are accommodated in the accommodating space.
In some embodiments, the battery module may be further assembled into a battery pack, and the number of battery modules included in the battery pack may be specifically adjusted based on the application and capacity of the battery pack.
FIG. 4 and FIG. 5 are schematic diagrams of a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can cover the lower box body 3, to form an enclosed space for accommodating the battery modules 4. The plurality of battery modules 4 may be arranged in the battery box in any manner.

## Electrical device

The present application further provides an electrical device. The electrical device includes at least one of the secondary battery, the battery module, and the battery pack of the present application. The secondary battery, the battery module, and the battery pack can be used as a power supply of the electrical device, and can also be used as an energy storage unit of the electrical device. The electrical device may include, but is not limited to, a mobile device (e.g., a mobile phone or a notebook computer), an electric vehicle (e.g., a pure electric vehicle, a hybrid electric vehicle, a plug-in hybrid electric vehicle, an electric bicycle, an electric scooter, an electric golf cart, or an electric truck), an electric train, a ship, a satellite, an energy storage system, and the like.
Whether to use the secondary battery, the battery module, or the battery pack may be determined according to use requirements of the electrical device.
FIG. 6 is a schematic diagram of an electrical device as an example. The electrical device 6 is a pure electric

vehicle, a hybrid electric vehicle, a plug-in hybrid electric vehicle, or the like. To satisfy requirements of the electrical device for high power and a high energy density, the battery pack 1 or the battery module may be used.

For another example, the electrical device may be a mobile phone, a tablet computer, a notebook computer, or the like. The electrical device is generally required to be light and thin, and may use a secondary battery as a power source.

## Examples

Examples of the present application are described below. The examples described below are illustrative, are merely used to explain the present application, and should not be construed as a limitation to the present application. Where specific techniques or conditions are not specified in the examples, the techniques or conditions described in the literatures of the art or the product specifications are followed. Where no manufacturer is indicated for the reagents or instruments used, they are conventional products that can be commercially obtained.

Example 1

1. Preparation of positive electrode

An aluminum foil having a thickness of 12 μm was used as a positive electrode current collector.

A positive electrode active material, a Super P conductive agent, a binder, and a dispersant were dissolved in N-methylpyrrolidone (NMP) at a weight ratio of 95.9:2.5:1.5:0.1 to prepare a positive electrode slurry. The positive electrode slurry was coated on an aluminum foil of a positive electrode current collector and dried at 85°C followed by cold pressing, trimming, slicing and slitting, and then further dried under vacuum at 85°C for 4 h, to obtain the positive electrode.

2. Preparation of negative electrode

A copper foil having a thickness of 8 μm was used as a negative electrode current collector.

A negative electrode active material including graphite, sodium carboxymethyl cellulose (CMC-Na), styrene-butadiene rubber (SBR), and conductive carbon was added into a certain amount of deionized water to prepare a negative electrode slurry, with the viscosity being controlled to be 3000 to 10000 mPa·S. The weight ratio of graphite:sodium carboxymethyl cellulose:styrene-butadiene rubber:conductive agent was 90:2:3:5. The negative electrode slurry was coated on a copper foil of a current collector and dried at 85°C, followed by cold pressing, trimming, slicing, and slitting, and then further dried under vacuum at 120°C for 12 h, to obtain a negative electrode.

3. Preparation of electrolyte solution

In an environment where the water content was less than 10 ppm, ethylene carbonate (EC), diethyl carbonate (DEC), and dimethyl carbonate (DMC) were mixed at a volume ratio of 1:1:1 to prepare a solvent of an electrolyte solution. 5 wt.% of fluoroethylene carbonate (FEC) was added. Then, a lithium salt which was lithium hexafluorophosphate is mixed with the solvent mixture to prepare an electrolyte solution having a lithium salt concentration of 1 mol/L.

(4) Preparation of lithium-ion battery

The prepared positive electrode, the prepared negative electrode, and a separator (polyethylene (PE) porous polymer film) were laminated into a corresponding battery core. The battery core was vacuum dried at 90°C for 12 h. Then, positive and negative electrode tabs were ultrasonically weld. An aluminum tab was used for the positive electrode, and a nickel tab was used for the negative electrode. The positive and negative tabs are located on the same side of the battery core. The battery core with the welded tabs was placed into an aluminum-plastic film for top-side sealing and packaging. The top-side sealing temperature was 145°C. An electrolyte solution was injected, followed by standing, formation, aging, venting, secondary packaging, and capacity testing, to obtain a prepared soft-pack laminated lithium-ion battery.

Comparative Example 1

A lithium-ion battery was prepared by using a method similar to that in Example 1 except that the first polymer was not added in Comparative Example 1.

Example 2-1 to Example 2-3

A lithium-ion battery was prepared by using a method similar to that in Example 1 except that the types of the

monomers of the first polymer was adjusted in Example 2-1 to Example 2-3.

Example 3-1 to Example 3-6

A lithium-ion battery was prepared by using a method similar to that in Embodiment 1 except that the weight ratio of the monomers of the first polymer was adjusted in Example 3-1 to Example 3-6.

Example 4-1 to Example 4-3

A lithium-ion battery was prepared by using a method similar to that in Embodiment 1 except that the weight ratio of the monomers of the first polymer was adjusted in Example 4-1 to Example 4-3.

Example 5

A lithium-ion battery was prepared by using a method similar to that in Example 1 except that the monomer type of the second polymer was adjusted in Example 5.

Example 5

A lithium-ion battery was prepared by using a method similar to that in Example 1 except that the monomer type of the second polymer was adjusted in Example 5.

Example 6

A lithium-ion battery was prepared by using a method similar to that in Example 1 except that the monomer type of the second polymer was adjusted in Example 6.

Example 7-1 to Example 7-5

A lithium-ion battery was prepared by using a method similar to that in Example 1 except that the amount of the first polymer added was adjusted in Example 7-1 to Example 7-5.

Example 8-1 to Example 8-4

A lithium-ion battery was prepared by using a method similar to that in Example 1 except that the amount of the second polymer added was adjusted in Example 8-1 to Example 8-4.

Example 8-5 to Example 8-6

A lithium-ion battery was prepared by using a method similar to that in Example 1 except that the type of the second active material was adjusted in Example 8-5 to Example 8-6.

Example 9-1 to Example 9-2

A lithium-ion battery was prepared by using a method similar to that in Example 1 except that the amount of the second polymer added was adjusted in Example 9-1 to Example 9-2.
Parameters of the examples and comparative examples are shown in Table 1 below.

**Test methods**

1. Measurement of the content of elements in the positive electrode

About 0.4 g of a dry positive electrode or about 1 g of a wet positive electrode (both accurate to 0.0001 g) was placed in a 25 mL beaker. 2 mL to 5 mL of nitric acid was added. After being left to stand overnight, the beaker was placed on an electric heating plate, and heated at about 100°C (where the temperature was controller by adjusting the input voltage temperature with a regulating transformer). After the positive electrode was digested, 0.5 mL of perchloric acid was added, and heated for digestion at about 140°C, until no more white smoke is generated. The residue should be white; otherwise, the addition of nitric acid and perchloric acid should be repeated for digestion. Finally, the residue was dissolved and

extracted with 7% (referring to the volume% of acid, the same below) hydrochloric acid. After the content of the element to be measured (e.g., Ni/Fe/Mn/Co/Li) was diluted to an appropriate volume, the sample was tested on an inductively coupled plasma optical emission spectrometry (ICP-OES) test instrument.

2. TG test of positive electrode

The coating on the positive electrode was scraped off to obtain powder. The amount of the powder should be 100 mg or more. Then, the powder sample was tested using a differential scanning calorimeter (DSC) to determine the weight loss ratio of the electrode. Test temperature range: 40°C to 630°C; temperature increasing rate: 10 k/min.

3. Determination of the molecular weight of the polymer

The molecular weight may be determined and analyzed by polymer molecular weight gel permeation chromatography according to GB/T 21863-2008. The test was performed using a GPC1515 instrument from Waters, US. The sample was dissolved in tetrahydrofuran for 12 h or more. The concentration of the sample was 4 mg/mL. The sample is filtered. The test was performed at a temperature of 25 °C and at flow rate of 1 mL/min.

4. Determination of the percentage by weight of the chain-end polymer in the second polymer

The content of the chain-end polymer (e.g., monomer derived from tetrafluoroethylene or hexafluoropropylene) in the second polymer may be controlled by adjusting the amount of materials added during the polymerization process. The amounts of monomers involved in the polymerization may be quantified by chromatographic testing of the unpolymerized gas components. The content of tetrafluoroethylene or hexafluoropropylene in the polymerization product may also be determined by a near infrared spectroscopy quantitative analysis method. Spectral data of a standard sample was decomposed and regressed to establish a standard curve. A spectral curve of the test sample was decomposed and compared with the standard curve to obtain a comparison result regarding the amount of polymerized monomer.

5. Determination of brittleness of the positive electrode

Four 4 cm (transverse direction) × 25 cm (longitudinal direction) positive electrode samples with an area of 100 $cm^2$ were taken. Each sample was pre-folded in the longitudinal direction (with head and tail ends of the sample being aligned with each other, but not in contact with each other). The pre-folded electrode was placed on a flat surface, and rolled once starting from the aligned ends along the longitudinal direction of the sample with a 2 kg cylindrical roller. Then, the sample was unfolded, to observe from the folding direction of the electrode whether the crease was light permeable or broken. If not, the sample was pre-folded in the direction opposite to the direction of the first folding, and rolled again. The crease was observed again. The operations were repeated until the crease was light permeable or broken. If the sample had been folded for n times when the crease was observed to be light permeable or broken, the brittleness of the electrode was determined to n-1 times of folding.

6. Cycle performance test of the lithium-ion battery at 25°C

The prepared soft-pack laminated battery was charged at 2.5 to 4.4 V and at $0.5C_0$ to 4.4 V in a constant-temperature environment of 25°C, then charged at a constant voltage of 4.4 $V_0$ to a current of $0.05C_0$ or more, allowed to stand for 5 min, and then discharged to 2.5 V at $1C_0$. The capacity was recorded as Cn (n=1, 2, 3, ...). The operations were repeated. The capacity retention rate was calculated according to a ratio of Cn/C3. When Cn/C3 × 100%=80%, the corresponding number of cycles was extracted as an indicator of the cycle performance.

**Test results**

The test results are shown in Table 1.
)

Table 1 ( $M=\frac{n_1\%}{n2\%}\times y$ in Table 1

| No. | First polymer (dispersant) | | | | | | | | | | Second polymer (binder) | | | Positive electrode | | | | |
|---|---|---|---|---|---|---|---|---|---|---|---|---|---|---|---|---|---|---|
| | Formula (1) | | Formula (2) | | Formula (3) | | a/c | a/ b | Weight average molecular weight Da | Percentage by weight x% | Type | Weight average molecular weight Da | Percentage by weight y% | First active material | Molar content $n_2$% | Second active material | Molar content $n_1$% | M |
| | Type | a | Type | b | Type | c | | | | | | | | | | | | |
| Comparative Example 1 | None | None | None | None | None | None | None | None | None | None | PVDF | 95w | 1.2% | NCM523 | 35.2% | $LiMn_{0.6}Fe_{0.4}PO_4$ | 6.4% | 0.22% |
| Example 1 | Formula (1-1) | 30 | Formula (2-1) | 2 | Formula (3-1) | 6 | 5 | 15 | 3770 | 0.2% | Formula (4-1) | 70w | 1.2% | NCM523 | 35.2% | $LiMno_{0.6}Fe_{0.4}PO_4$ | 6.4% | 0.22% |
| Example 2-1 | Formula (1-2) | 30 | Formula (2-1) | 2 | Formula (3-1) | 6 | 5 | 15 | 4190 | 0.2% | Formula (4-1) | 70w | 1.2% | NCM523 | 35.2% | $LiMn_{0.6}Fe_{0.4}PO_4$ | 6.4% | 0.22% |
| Example 2-2 | Formula (1-1) | 30 | Formula (2-2) | 2 | Formula (3-1) | 6 | 5 | 15 | 3800 | 0.2% | Formula (4-1) | 70w | 1.2% | NCM523 | 35.2% | $LiMn_{0.6}Fe_{0.4}PO_4$ | 6.4% | 0.22% |
| Example 2-3 | Formula (1-1) | 30 | Formula (2-1) | 2 | Formula (3-2) | 6 | 5 | 15 | 3910 | 0.2% | Formula (4-1) | 70w | 1.2% | NCM523 | 35.2% | $LiMn_{0.6}Fe_{0.4}PO_4$ | 6.4% | 0.22% |
| Example 3-1 | Formula (1-1) | 30 | Formula (2-1) | 2 | Formula (3-1) | 300 | 0.1 | 15 | 16700 | 0.2% | Formula (4-1) | 70w | 1.2% | NCM523 | 35.2% | $LiMn_{0.6}Fe_{0.4}PO_4$ | 6.4% | 0.22% |
| Example 3-2 | Formula (1-1) | 30 | Formula (2-1) | 2 | Formula (3-1) | 15 | 2 | 15 | 4160 | 0.2% | Formula (4-1) | 70w | 1.2% | NCM523 | 35.2% | $LiMn_{0.6}Fe_{0.4}PO_4$ | 6.4% | 0.22% |
| Example 3-3 | Formula (1-1) | 30 | Formula (2-1) | 2 | Formula (3-1) | 3 | 10 | 15 | 3640 | 0.2% | Formula (4-1) | 70w | 1.2% | NCM523 | 35.2% | $LiMn_{0.6}Fe_{0.4}PO_4$ | 6.4% | 0.22% |
| Example 3-4 | Formula (1-1) | 60 | Formula (2-1) | 4 | Formula (3-1) | 5 | 12 | 15 | 7200 | 0.2% | Formula (4-1) | 70w | 1.2% | NCM523 | 35.2% | $LiMn_{0.6}Fe_{0.4}PO_4$ | 6.4% | 0.22% |
| Example 3-5 | Formula (1-1) | 450 | Formula (2-1) | 30 | Formula (3-1) | 90 | 5 | 15 | 56010 | 0.2% | Formula (4-1) | 70w | 1.2% | NCM523 | 35.2% | $LiMn_{0.6}Fe_{0.4}PO_4$ | 6.4% | 0.22% |
| Example 3-6 | Formula (1-1) | 300 | Formula (2-1) | 20 | Formula (3-1) | 50 | 6 | 15 | 37000 | 0.2% | Formula (4-1) | 70w | 1.2% | NCM523 | 35.2% | $LiMn_{0.6}Fe_{0.4}PO_4$ | 6.4% | 0.22% |
| Example 4-1 | Formula (1-1) | 20 | Formula (2-1) | 2 | Formula (3-1) | 4 | 5 | 10 | 3680 | 0.2% | Formula (4-1) | 70w | 1.2% | NCM523 | 35.2% | $LiMn_{0.6}Fe_{0.4}PO_4$ | 6.4% | 0.22% |
| Example 4-2 | Formula (1-1) | 40 | Formula (2-1) | 2 | Formula (3-1) | 8 | 5 | 20 | 4970 | 0.2% | Formula (4-1) | 70w | 1.2% | NCM523 | 35.2% | $LiMn_{0.6}Fe_{0.47}PO_4$ | 6.4% | 0.22% |

(continued)

Table 1 ( $M=\frac{n_1\%}{n2\%}\times y$ in Table 1

| No. | First polymer (dispersant) | | | | | | | | | | Second polymer (binder) | | | Positive electrode | | | | |
|---|---|---|---|---|---|---|---|---|---|---|---|---|---|---|---|---|---|---|
| | Formula (1) | | Formula (2) | | Formula (3) | | a/c | a/ b | Weight average molecular weight Da | Percentage by weight x% | Type | Weight average molecular weight Da | Percentage by weight y% | First active material | Molar content $n_2$% | Second active material | Molar content $n_1$% | M |
| | Type | a | Type | b | Type | c | | | | | | | | | | | | |
| Example 4-3 | Formula (1-1) | 10 | Formula (2-1) | 2 | Formula (3-1) | 2 | 5 | 5 | 1372 | 0.2% | Formula (4-1) | 70w | 1.2% | NCM523 | 35.2% | $LiMn_{0.6}Fe_{0.4}PO_4$ | 6.4% | 0.22% |
| Example 5 | Formula (1-1) | 30 | Formula (2-1) | 2 | Formula (3-1) | 6 | 5 | 15 | 3770 | 0.2% | Formula (4-3) | 71w | 1.2% | NCM523 | 35.2% | $LiMn_{0.6}Fe_{0.4}PO_4$ | 6.4% | 0.22% |
| Example 6 | Formula (1-1) | 30 | Formula (2-1) | 2 | Formula (3-1) | 6 | 5 | 15 | 3770 | 0.2% | PVDF | 95w | 1.2% | NCM523 | 35.2% | $LiMn_{0.6}Fe_{0.4}PO_4$ | 6.4% | 0.22% |
| Example 7-1 | Formula (1-1) | 30 | Formula (2-1) | 2 | Formula (3-1) | 6 | 5 | 15 | 3770 | 0.05% | Formula (4-1) | 70w | 1.2% | NCM523 | 35.2% | $LiMn_{0.6}Fe_{0.4}PO_4$ | 6.4% | 0.22% |
| Example 7-2 | Formula (1-1) | 30 | Formula (2-1) | 2 | Formula (3-1) | 6 | 5 | 15 | 3770 | 0.4% | Formula (4-1) | 70w | 1.2% | NCM523 | 35.2% | $LiMn_{0.6}Fe_{0.4}PO_4$ | 6.4% | 0.22% |
| Example 7-3 | Formula (1-1) | 30 | Formula (2-1) | 2 | Formula (3-1) | 6 | 5 | 15 | 3770 | 0.6% | Formula (4-1) | 70w | 1.2% | NCM523 | 35.2% | $LiMn_{0.6}Fe_{0.4}PO_4$ | 6.4% | 0.22% |
| Example 7-4 | Formula (1-1) | 30 | Formula (2-1) | 2 | Formula (3-1) | 6 | 5 | 15 | 3770 | 0.02% | Formula (4-1) | 70w | 1.2% | NCM523 | 35.2% | $LiMn_{0.6}Fe_{0.4}PO_4$ | 6.4% | 0.22% |
| Example 7-5 | Formula (1-1) | 30 | Formula (2-1) | 2 | Formula (3-1) | 6 | 5 | 15 | 3770 | 1% | Formula (4-1) | 70w | 1.2% | NCM523 | 35.2% | $LiMn_{0.6}Fe_{0.4}PO_4$ | 6.4% | 0.22% |
| Example 8-1 | Formula (1-1) | 30 | Formula (2-1) | 2 | Formula (3-1) | 6 | 5 | 15 | 3770 | 0.2% | Formula (4-1) | 70w | 1.4% | NCM523 | 35.2% | $LiMn_{0.6}Fe_{0.4}PO_4$ | 6.4% | 0.25% |
| Example 8-2 | Formula (1-1) | 30 | Formula (2-1) | 2 | Formula (3-1) | 6 | 5 | 15 | 3770 | 0.2% | Formula (4-1) | 70w | 1.6% | NCM523 | 35.2% | $LiMn_{0.6}Fe_{0.4}PO_4$ | 6.4% | 0.29% |
| Example 8-3 | Formula (1-1) | 30 | Formula (2-1) | 2 | Formula (3-1) | 6 | 5 | 15 | 3770 | 0.2% | Formula (4-1) | 70w | 0.8% | NCM523 | 35.2% | $LiMn_{0.6}Fe_{0.4}PO_4$ | 6.4% | 0.15% |
| Example 8-4 | Formula (1-1) | 30 | Formula (2-1) | 2 | Formula (3-1) | 6 | 5 | 15 | 3770 | 0.2% | Formula (4-1) | 70w | 2.0% | NCM523 | 35.2% | $LiMn_{0.6}Fe_{0.4}PO_4$ | 6.4% | 0.36% |
| Example 8-5 | Formula (1-1) | 30 | Formula (2-1) | 2 | Formula (3-1) | 6 | 5 | 15 | 3770 | 0.2% | Formula (4-1) | 70w | 2.0% | NCM523 | 35.2% | $Li_{0.999}Mn_{0.60}Fe_{0.393}V_{0.004}Co_{0.003}P_{0.999}S_{0.001}O_4$ | 6.4% | 0.36% |

(continued)

Table 1 ( $M=\frac{n_1\%}{n2\%}\times y$ in Table 1

| No. | First polymer (dispersant) | | | | | | | | | | Second polymer (binder) | | | Positive electrode | | | | |
|---|---|---|---|---|---|---|---|---|---|---|---|---|---|---|---|---|---|---|
| | Formula (1) | | Formula (2) | | Formula (3) | | a/c | a/ b | Weight average molecular weight Da | Percentage by weight x% | Type | Weight average molecular weight Da | Percentage by weight y% | First active material | Molar content $n_2$% | Second active material | Molar content $n_1$% | M |
| | Type | a | Type | b | Type | c | | | | | | | | | | | | |
| Example 8-6 | Formula (1-1) | 30 | Formula (2-1) | 2 | Formula (3-1) | 6 | 5 | 15 | 3770 | 0.2% | Formula (4-1) | 70w | 2.0% | NCM523 | 35.2% | $Li_{0.994}Mo_{0.001}Mn_{0.65}Fe_{0.35}P_{0.999}Si_{0.001}O_{3.999}F_{0.001}$ | 6.4% | 0.36% |
| Example 9-1 | Formula (1-1) | 30 | Formula (2-1) | 2 | Formula (3-1) | 6 | 5 | 15 | 3770 | 0.2% | Formula (4-1) | 70w | 1.2% | NCM523 | 27.1% | None | / | / |
| Example 9-2 | Formula (1-1) | 30 | Formula (2-1) | 2 | Formula (3-1) | 6 | 5 | 15 | 3770 | 0.2% | Formula (4-1) | 70w | 1.2% | None | / | $LiMn_{0.6}Fe_{0.4}PO_4$ | 19.8 % | / |

Table 2

| Serial number | Brittleness of positive electrode | Cycle performance of lithium-ion battery at 25°C |
|---|---|---|
| Comparative Example 1 | 1 | 597 cycles |
| Example 1 | 4 | 1469 cycles |
| Example 2-1 | 3 | 1294 cycles |
| Example 2-2 | 3 | 1317 cycles |
| Example 2-3 | 3 | 1308 cycles |
| Example 3-1 | 4 | 736 cycles |
| Example 3-2 | 4 | 891 cycles |
| Example 3-3 | 2 | 865 cycles |
| Example 3-4 | 2 | 673 cycles |
| Example 3-5 | 2 | 769 cycles |
| Example 3-6 | 2 | 681 cycles |
| Example 4-1 | 3 | 768 cycles |
| Example 4-2 | 3 | 759 cycles |
| Example 4-3 | 3 | 727 cycles |
| Example 5 | 4 | 1384 cycles |
| Example 6 | 3 | 781 cycles |
| Example 7-1 | 2 | 631 cycles |
| Example 7-2 | 3 | 1035 cycles |
| Example 7-3 | 4 | 897 cycles |
| Example 7-4 | 2 | 718 cycles |
| Example 7-5 | 2 | 783 cycles |
| Example 8-1 | 4 | 1447 cycles |
| Example 8-2 | 3 | 1342 cycles |
| Example 8-3 | 2 | 719 cycles |
| Example 8-4 | 2 | 757 cycles |
| Example 8-5 | 2 | 896 cycles |
| Example 8-6 | 2 | 812 cycles |
| Example 9-1 | 2 | 1030 cycles |
| Example 9-2 | 2 | 631 cycles |

It can be seen from Tables 1 and 2 that no dispersant was added to the positive electrode slurry of Comparative Example 1, and the risk of agglomeration of the positive electrode slurry was high, which was likely to cause blockage of the filter element and pipes, and the flexibility of the electrode formed after the slurry was cured was poor, and the electrode was prone to cracking, deteriorating the cycle performance of the lithium-ion battery.

Compared with Comparative Example 1, the addition of the first polymer as a dispersant to the positive electrode slurry of Example 6 can significantly improve the stability of the dispersion of the particles of the positive electrode active material, thereby improving the processability of the positive electrode slurry. The dispersant can also increase the flexibility of the electrode while improving the processability of the slurry, thereby solving the problem of cracking of the electrode during winding, and improving the cycle performance of the lithium-ion battery.

Compared with Example 6, the positive electrode slurry of Example 1 not only used the first polymer as a dispersant, but also used the second polymer in place of PVDF, and the first polymer and the second polymer have a synergistic effect to improve the uniform dispersion of the particles of the positive electrode active material while improving the binding performance of the positive electrode slurry, thereby improving the stability of the positive electrode slurry, and

improving the cycle performance of the lithium-ion battery.

In the embodiments of the present application, the cycle performance of the lithium-ion battery can be further improved by adjusting the type and content of the first polymer monomer, the type and content of the second polymer monomer, and the like.

While the present application has been described with reference to preferred embodiments, various modifications may be made thereto and components therein may be replaced with equivalents without departing from the scope of the present application. Especially, as long as there is no structural conflict, the various technical features mentioned in each embodiment can be combined in any way. The present application is not limited to the particular embodiments disclosed herein, but includes all technical solutions that fall within the scope of the claims.

## Claims

1. A polymer, comprising a first polymer, wherein the first polymer comprises a structural unit represented by formula (1):

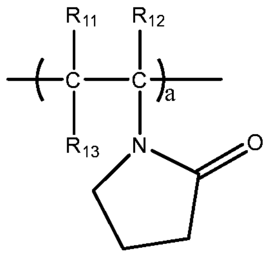

Formula (1),

wherein in formula (1),
$R_{11}$, $R_{12}$, and $R_{13}$ each independently comprise a hydrogen atom or a substituted or unsubstituted C1-C5 alkyl group; and when substituted, the substituent comprises a halogen atom; and
the first polymer further comprises a structural unit represented by formula (2):

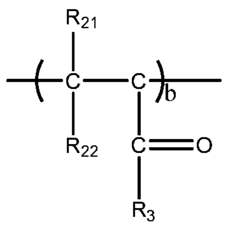

Formula (2)

wherein in formula (2),
$R_{21}$ and $R_{22}$ each independently comprise a hydrogen atom or a substituted or unsubstituted C1-C5 alkyl group; and when substituted, the substituent comprises a halogen atom; and
$R_3$ comprises a hydroxyl-terminated polymer group.

2. The polymer according to claim 1, wherein

$R_{11}$, $R_{12}$, and $R_{13}$ each independently comprise a hydrogen atom or a substituted or unsubstituted C1-C3 alkyl group;
optionally, $R_{11}$, $R_{12}$, and $R_{13}$ each independently comprise a hydrogen atom, a methyl, or an ethyl; and
further optionally, the structural unit represented by formula (1) comprises one or more of structural units represented by formula (1-1) to formula (1-5):

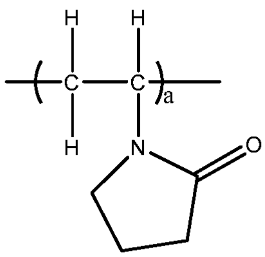
Formula (1-1),

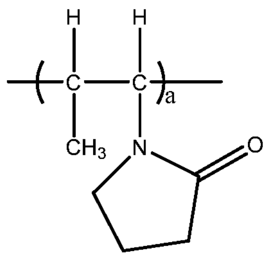
Formula (1-2),

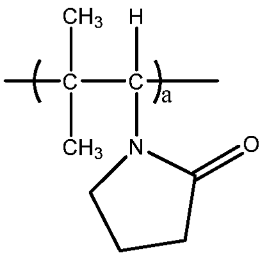
Formula (1-3),

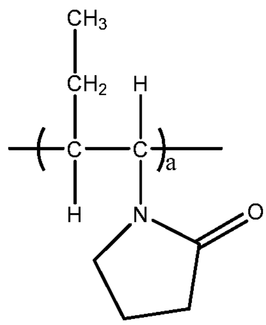
Formula (1-4),

and

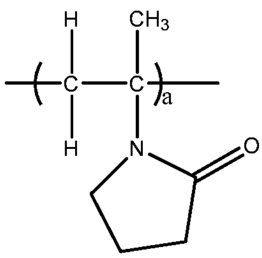
Formula (1-5).

**3.** The polymer according to claim 1 or 2, wherein

$R_{21}$ and $R_{22}$ each independently comprise a hydrogen atom or a substituted or unsubstituted C1-C3 alkyl group; optionally, $R_{21}$ and $R_{22}$ each independently comprise a hydrogen atom, a methyl, or an ethyl; and further optionally, the structural unit represented by formula (2) comprises one or more of structural units represented by formula (2-1) to formula (2-4):

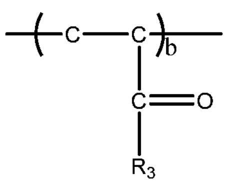
Formula (2-1),

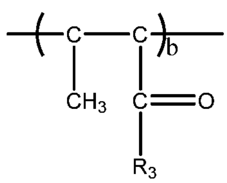
Formula (2-2),

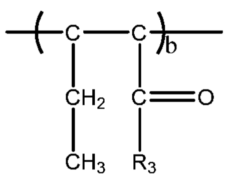
Formula (2-3), and

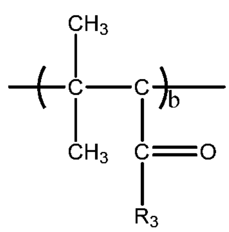
Formula (2-4).

**4.** The polymer according to any one of claims 1 to 3, wherein $R_3$ comprises one or more of structural units represented by

formula (3-1) to formula (3-4):

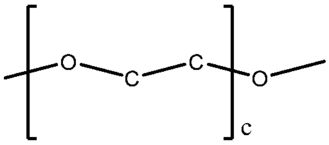 Formula (3-1), 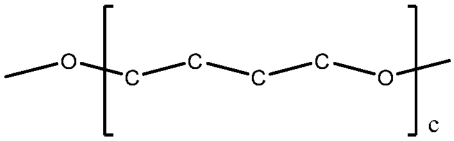 Formula (3-2),

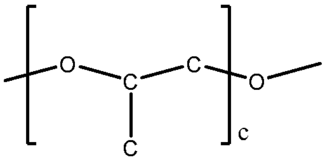 Formula (3-3), and 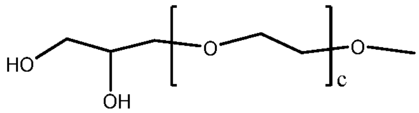 Formula (3-4).

**5.** The polymer according to claim 4, wherein $0.05 \leq a/c \leq 20$; optionally, $0.1 \leq a/c \leq 10$; and optionally, c is a positive integer from 2 to 500.

**6.** The polymer according to any one of claims 1 to 5, wherein $a/b \geq 10$; and optionally, a is a positive integer from 10 to 500; and /or b is a positive integer from 1 to 500.

**7.** The polymer according to any one of claims 1 to 6, wherein the weight average molecular weight of the first polymer is $2 \times 10^3$ Da to $1 \times 10^5$ Da, optionally $2 \times 10^3$ Da to $6 \times 10^4$ Da.

**8.** A method for preparing a polymer, comprising:

providing a first monomer and polymerizing the first monomer to form a first copolymer;
adding a second monomer to the first copolymer for polymerization to form a second copolymer, wherein a terminal group of the second copolymer comprises a carboxyl group; and
adding a hydroxyl-terminated polymer to the second copolymer for esterification to form a first polymer, wherein
the first monomer comprises a compound represented by formula (I):

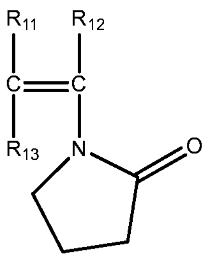 Formula (I),

wherein in formula (I), $R_{11}$, $R_{12}$, and $R_{13}$ each independently comprise a hydrogen atom or a substituted or unsubstituted C1-C5 alkyl group; and when substituted, the substituent comprises a halogen atom; and
the second monomer comprises a compound represented by formula (II):

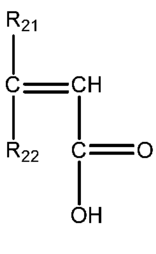 Formula (II),

wherein in formula (II), $R_{21}$ and $R_{22}$ each independently comprise a hydrogen atom or a substituted or unsubstituted C1-C5 alkyl group; and when substituted, the substituent comprises a halogen atom.

**9.** The method according to claim 8, wherein the compound represented by formula (I) comprises one or more of compounds represented by formula (I-1) to formula (I-5):

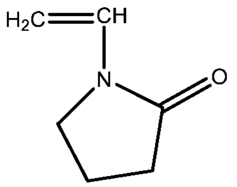
Formula (I-1),

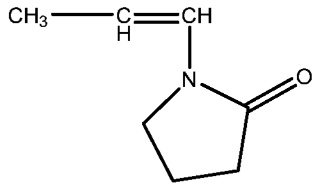
Formula (I-2),

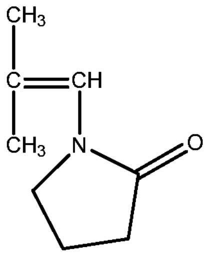
Formula (I-3),

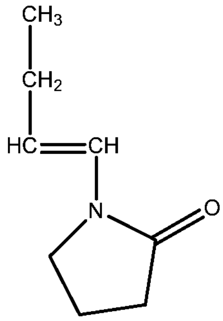
Formula (I-4),

and

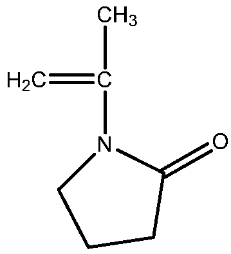
Formula (I-5).

**10.** The method according to claim 8 or 9, wherein the second monomer comprises one or more of acrylic acid, n-butenoic acid, hexenoic acid, n-pentenoic acid, isopentenic acid, n-hexenoic acid, isohexenoic acid, n-heptenoic acid, and isoheptenoic acid.

**11.** The method according to any one of claims 8 to 10, wherein the hydroxyl-terminated polymer comprises one or more of polytetrahydrofuran, polyethylene oxide, polyethylene glycol, polypropylene glycol, and polyoxypropylene triol.

**12.** A positive electrode, comprising a positive electrode current collector and a positive electrode film layer arranged on at least one surface of the positive electrode current collector, wherein the positive electrode film layer comprises the first polymer according to any one of claims 1 to 7 or the first polymer according to any one of claims 8 to 11.

**13.** The positive electrode according to claim 12, wherein the positive electrode film layer further comprises a second polymer, and the second polymer comprises a compound represented by formula (4):

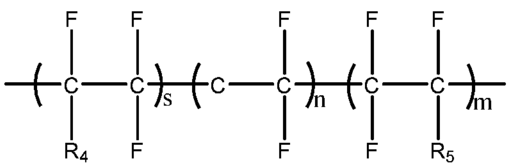
Formula (4),

wherein in formula (4),

$R_4$ and $R_5$ each independently comprise a fluorine atom or a C1-C5 perfluoroalkyl group; optionally, n>s; and /or

n>m; and
further optionally,
s comprises a positive integer from 1 to 1000; and /or
n comprises a positive integer ranging from 9000 to 13000; and /or
m comprises a positive integer from 1 to 1000.

**14.** The positive electrode according to claim 12 or 13, wherein
the weight average molecular weight of the second polymer is $6\times10^5$ Da to $1\times10^6$ Da, optionally $6\times10^5$ Da to $8\times10^5$ Da.

**15.** The positive electrode according to claim 13 or 14, wherein
based on the total weight of the positive electrode film layer, the content in percentage by weight of the second polymer is y%, where $0.8\leq y\leq2.0$; and optionally, $1.0\leq y\leq1.6$.

**16.** The positive electrode according to any one of claims 12 to 15, wherein
based on the total weight of the positive electrode film layer, the content in percentage by weight of the first polymer is x%, where $0.02\leq x\leq1$; and optionally, $0.05\leq x\leq0.60$.

**17.** The positive electrode according to any one of claims 12 to 16, wherein

the positive electrode active material comprises a first active material having a molecular formula of $Li_{x1}A_{y1}Ni_{a1}Co_{b1}Mn_{c1}M_{(1-a1-b1-c1)}Y_{z1}$, wherein $0\leq x1\leq2.1$, $0\leq y1\leq2.1$, and $0.9\leq x1+y1\leq2.1$; $0<a1\leq1$, $0<b1\leq1$, $0<c1\leq1$, and $0.1\leq a1+b1+c1\leq1$; $1.8\leq z1\leq3.5$; A comprises one or more of Na, K, and Mg; M comprises one or more of B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce; Y comprises one or more of O and F; and /or
the positive electrode active material comprises a first active material having a molecular formula of $Li_{x2}A'_{y2}Me'_{a2}M'_{b2}P_{1-c2}X'_{c2}Y'_{z2}$, wherein $0\leq x2\leq1.3$, $0\leq y2\leq1.3$, and $0.9\leq x2+y2\leq1.3$; $0.9\leq a2\leq1.5$, $0\leq b2\leq0.5$, and $0.9\leq a2+b2\leq1.5$; $0\leq c2\leq0.5$; $3\leq z2\leq5$; A' comprises one or more of Na, K, and Mg; Me' comprises one or more of Mn, Fe, Co, and Ni; M' comprises one or more of B, Mg, Al, Si, P, S, Ca, Sc, Ti, V, Cr, Cu, Zn, Sr, Y, Zr, Nb, Mo, Cd, Sn, Sb, Te, Ba, Ta, W, Yb, La, and Ce; X' comprises one or more of S, Si, Cl, B, C, and N; and Y' comprises one or more of O and F.

**18.** The positive electrode according to claim 17, wherein the positive electrode further satisfies:

$$0.03\% < \frac{n_1\%}{n2\%}\times y \leq 0.4\%$$ ; optionally, $$0.14\% < \frac{n_1\%}{n2\%}\times y \leq 0.37\%$$ , further optionally, $$0.20\% < \frac{n_1\%}{n2\%}\times y \leq 0.30\%$$ ,

wherein
$n_1$% represents the molar content of element Ni in the positive electrode active material, based on the total molar amount of the positive electrode film layer;
$n_2$% represents the molar content of element Me' in the positive electrode active material, based on the total molar amount of the positive electrode film layer;
y% represents the percentage by weight of the second polymer, based on the total weight of the positive electrode film layer;
optionally, $1\%\leq n_1\%\leq8\%$; and
optionally, $30\%\leq n_2\%\leq45\%$.

**19.** A secondary battery, comprising the positive electrode according to any one of claims 12 and 18.

**20.** An electrical device, comprising the secondary battery according to claim 19.

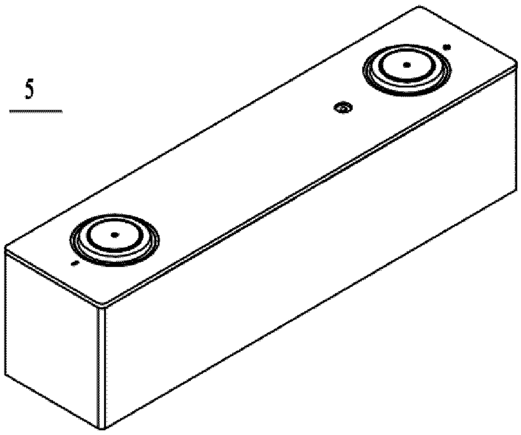


FIG. 1

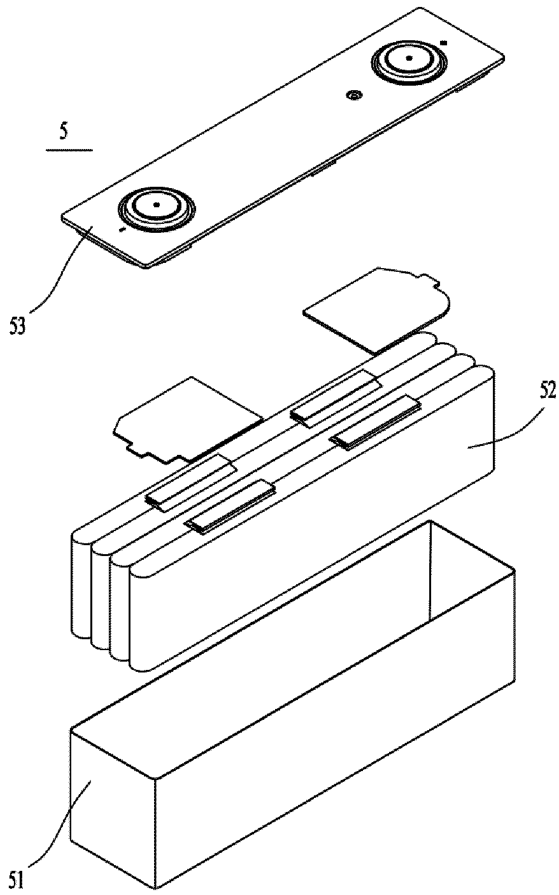


FIG. 2

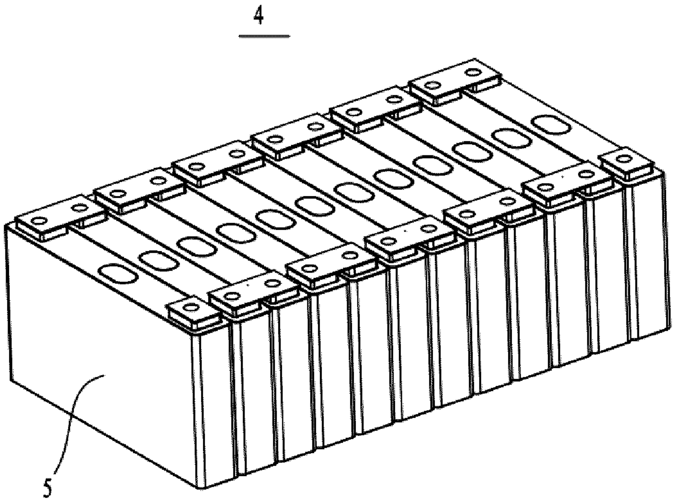


FIG. 3

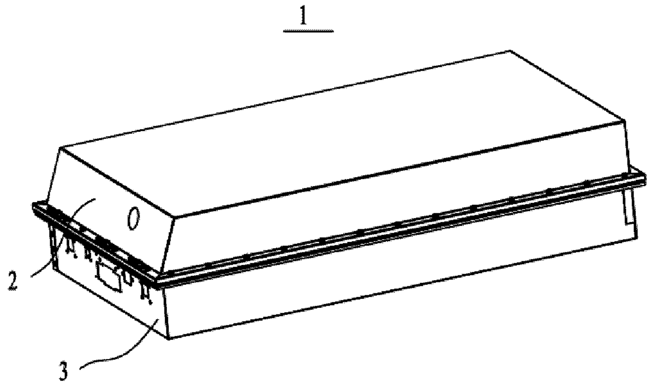


FIG. 4

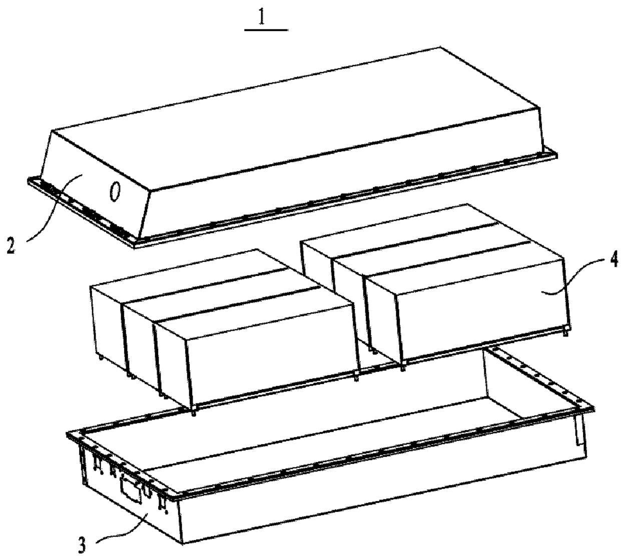


FIG. 5

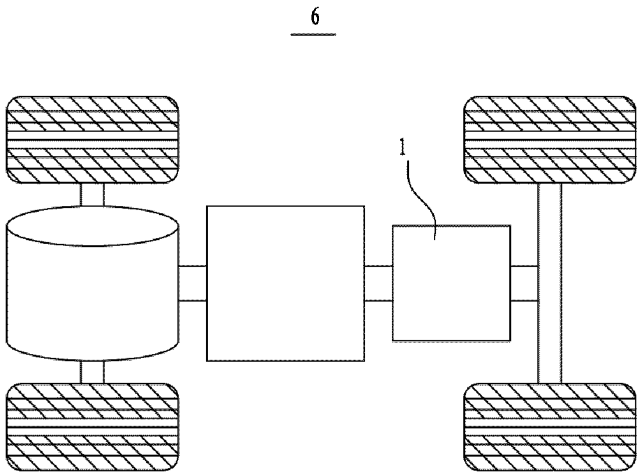


FIG. 6

**INTERNATIONAL SEARCH REPORT**

International application No. **PCT/CN2023/082671**

**A. CLASSIFICATION OF SUBJECT MATTER**

C08F226/10(2006.01)i;C08F220/06(2006.01)i;H01M10/0525(2010.01)i;H01M4/62(2006.01)i;H01M4/131(2010.01)i

According to International Patent Classification (IPC) or to both national classification and IPC

**B. FIELDS SEARCHED**

Minimum documentation searched (classification system followed by classification symbols)

IPC:C08F, H01M

Documentation searched other than minimum documentation to the extent that such documents are included in the fields searched

Electronic data base consulted during the international search (name of data base and, where practicable, search terms used)

CNKI, CNTXT, ENTXT(C), DWPI, ISI web of science: 乙烯基吡咯烷酮, 乙烯吡咯烷酮, 丙烯酸, 丙烯酸酯, 聚氧化乙烯, 聚乙二醇, 聚氧乙烯, 聚四氢呋喃, 聚丙二醇, 聚氧化丙烯三醇, 羟基, 二次电池, 锂, 正极, 分散剂, 粘结剂, vinylpyrrolidone, +acrylic acid, +acrylate, polyethylene oxide, polyethylene glycol, polyoxyethylene, polytetrahydrofuran, polypropylene glycol, polyoxypropylene triol, hydroxyl, secondary battery, lithium, positive electrode, dispersant, binder

**C. DOCUMENTS CONSIDERED TO BE RELEVANT**

| Category* | Citation of document, with indication, where appropriate, of the relevant passages | Relevant to claim No. |
|---|---|---|
| X | CN 1442458 A (FUDAN UNIVERSITY) 17 September 2003 (2003-09-17)<br>claim 2, and description, page 2, paragraph 3 | 1-11 |
| X | WO 2017009030 A1 (HENKEL AG & CO. KGAA) 19 January 2017 (2017-01-19)<br>abstract, and embodiment 1 | 1-11 |
| A | CN 109964347 A (LG CHEMICAL LTD.) 02 July 2019 (2019-07-02)<br>entire document | 1-20 |
| A | CN 115763819 A (SVOLT ENERGY TECHNOLOGY (SHANGRAO) CO., LTD.) 07 March 2023 (2023-03-07)<br>entire document | 1-20 |
| A | CN 115340624 A (NINGDE CONTEMPORARY AMPEREX TECHNOLOGY CO., LTD.) 15 November 2022 (2022-11-15)<br>entire document | 1-20 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 April 2023** | **27 April 2023** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**
**Information on patent family members**

International application No.
**PCT/CN2023/082671**

| Patent document cited in search report | Publication date (day/month/year) | Patent family member(s) | Publication date (day/month/year) |
|---|---|---|---|
| CN 1442458 A | 17 September 2003 | CN 1202185 C | 18 May 2005 |
| WO 2017009030 A1 | 19 January 2017 | EP 3320073 A1 | 16 May 2018 |
| | | EP 3320073 B1 | 09 September 2020 |
| | | DE 102015212963 A1 | 12 January 2017 |
| CN 109964347 A | 02 July 2019 | JP 2019527916 A | 03 October 2019 |
| | | JP 6702597 B2 | 03 June 2020 |
| | | WO 2019022359 A1 | 31 January 2019 |
| | | US 2020176775 A1 | 04 June 2020 |
| | | US 11031598 B2 | 08 June 2021 |
| | | EP 3483965 A1 | 15 May 2019 |
| | | EP 3483965 A4 | 07 August 2019 |
| | | EP 3483965 B1 | 11 November 2020 |
| | | KR 20190011943 A | 08 February 2019 |
| | | KR 102183660 B1 | 26 November 2020 |
| | | CN 10996434 B | 08 February 2022 |
| CN 115763819 A | 07 March 2023 | None | |
| CN 115340624 A | 15 November 2022 | None | |

Form PCT/ISA/210 (patent family annex) (July 2022)